# EUROPEAN PATENT SPECIFICATION

(11) **EP 2 851 257 B1**
(45) Date of publication and mention of the grant of the patent: **09.09.2020**
(21) Application number: 13185797.1
(22) Date of filing: 24.09.2013
(51) Int. Cl.: B61D 17/02

(54) **Vehicle with an aerodynamically optimized vehicle head**
Fahrzeug mit aerodynamisch optimierter Fahrzeugfront
Véhicule doté d'une tête de véhicule aérodynamiquement optimisée

(43) Date of publication of application: 25.03.2015
(73) Proprietor: Bombardier Transportation GmbH, 10785 Berlin (DE)
(72) Inventor: TIETZE, Andreas, 13595 Berlin (DE); ORELLANO, Alexander, 13629 Berlin (DE); SCHOBER, Martin, 14089 Berlin (DE); GENCASLAN, Umut, 30163 Hannover (DE); GARSKE, Gero, 10999 Berlin (DE); STEILEN, Stefan, 13088 Berlin (DE); CASPARI, Marco, 14621 Schönwalde-Glien OT Pausin (DE); BROGAN, Michael, Shrewsbury, SY3 8RW (GB)
(74) Representative: Cohausz & Florack

(56) References cited:
- EP-A1- 2 213 544
- DE-A1- 3 936 645
- DE-A1- 10 109 831
- FR-A1- 2 675 760
- FR-A1- 2 791 025

## Description

### BACKGROUND OF THE INVENTION

The invention relates to a vehicle, in particular a rail vehicle, for a bidirectional operation at a nominal travelling speed, in particular above 160 km/h to 200 km/h, in a respective direction of travel comprising at least one vehicle module with a wagon body being supported on a running gear configured to run on a track defining a track level. The vehicle module defines a longitudinal direction, a transverse direction and a height direction. The wagon body has an outer skin defining a generally prismatic body section and a non-prismatic head section located at one of its ends. The vehicle module, at a transition between the body section, and the head section, has a maximum vehicle height dimension above the track level in the height direction. The wagon body, in the head section, has a flow separation section comprising a flow separation device, in particular a flow separation edge, the flow separation device, in particular, the flow separation edge, in a transversally central area of the wagon body and at least in an activated state, being located at a flow separation height in the vehicle height direction. The flow separation device provides a persistent separation of an airflow from the outer skin of the wagon body when the vehicle module runs at the travelling speed with the head section forming a trailing end of the vehicle module. The invention further relates to a method of operating such a vehicle.

The wagon bodies of vehicles, in particular rail vehicles, travelling (under normal operating conditions) at relatively high speeds in both directions typically are aerodynamically optimized in terms of minimizing the flow resistance or drag of the vehicle. To this end, typically, the head sections (of typically substantially identical outer shape) at both ends of the vehicle have a smoothly and continuously curved outer skin generating as few drag as possible under normal operating conditions. This smoothly curved design is mainly due to the fact that the head section, when located at the leading end of the vehicle, shall generate as few drag as possible.

However, when such a head section aerodynamically optimized for leading end operation is located at the trailing end of the vehicle several aerodynamic problems arise (in particular with rail vehicles having a relatively large wagon body cross-section in a plane perpendicular to their longitudinal direction)

One of these problems lies in the fact that a periodically alternating flow separation pattern (similar to a so called Karman vortex street) may develop at both sides of the trailing end of the vehicle leading to a considerable vibration excitation of the vehicle and, consequently, to running instability problems. In order to avoid these running instability problems it has been suggested in DE 199 12 144 C1 and JP 01074160 A (the entire disclosure of which is incorporated herein by reference) to provide a selectively activatable flow separation device in the region of the head section. This flow separation device, in the height direction of the vehicle, extends at least over the majority of the respective lateral surface of the outer skin as well as over the roof part of the outer skin in order to have a large impact on the flow separation behaviour in the head section.

When located at the leading end of the vehicle, this flow separation device is in a retracted state and, consequently, aerodynamically ineffective in order to avoid any increase in the drag of the leading end head section of the vehicle. However, when located at the trailing end of the vehicle, this flow separation device is in an extended state providing a pronounced flow separation edge and, consequently, aerodynamically effective to provide an improved flow separation behaviour avoiding the above vibration excitation.

Although this flow separation device provides an improvement as far as the reduction in the vibration excitation is concerned it has the disadvantage that, on the one hand, it is a rather large component requiring considerable construction effort to guarantee proper operation. On the other hand, further aerodynamic problems that will be outlined below may not be avoided by such a solution.

One of these further aerodynamic problems lies in the fact that large vehicles, such as rail vehicles, running at high speeds typically induce considerable air pressure fluctuations and, consequently, draft air flows in the immediate vicinity of the vehicle (henceforth also referred to as "slipstream"). These air pressure fluctuations and slipstream effects ultimately generate sudden loads (henceforth also referred to as "aerodynamic trackside loads") on persons or objects present in the surroundings of the track used by the vehicle (e.g. passengers waiting on a railway station platform, trackside workers, infrastructure components etc). Depending on the speed and the aerodynamic properties of the vehicle as well as on the position of the person or object in relation to the track these slipstream induced aerodynamic trackside loads can be of significant strength potentially resulting (immediately or over time) in damage of trackside structures or (eventually hazardous) destabilization of persons.

Since such slipstream induced aerodynamic trackside loads on persons or objects in the vicinity of the track constitute a safety relevant issue, typically, their limitation is the object of corresponding safety regulations set up by the operator of the transportation infrastructure, governmental, national or multinational institutions etc. For example, in Europe, the so called "Technical Specification of Interoperability" (TSI) has been set up for the railway traffic field defining, among others, maximum limits for the flow speeds or loads to be experienced at defined trackside positions (i.e. defined relative positions with respect to the track used by a passing rail vehicle). For example, this TSI defines maximum limits for a trackside point located 3 m laterally from the track center and 0.2 m above track level (trackside worker scenario) or 1.2 m to 1.44 m above track level (person on platform scenario).

The passage of a rail vehicle can be split into several phases, an encountering phase, a passing phase and a wake phase. The vehicle position (relative to a given trackside location) and, consequently, the point in time at which the strongest trackside aerodynamic loads occur is strongly dependent on the type of the passing vehicle. Freight trains usually show the maximum aerodynamic trackside loads in the lateral boundary region of the train while smooth passenger trains typically show these maximum aerodynamic trackside loads in the wake region after the tail passage. While the flow intensity in the slipstream strongly depends on a series of different boundary conditions (such as the train speed or crosswind) one of the most important vehicle design related factors is the shape of its tail defining the flow pattern developing in the wake.

Many modern medium-speed and high-speed rail vehicle designs (similar to the ones disclosed in DE 199 12 144 C1 and JP 01074160 A) show a slipstream behaviour where two pronounced laterally adjacent longitudinal wake vortices develop at the trailing end of the vehicle. These wake vortices have opposed senses of rotation such that each one of the longitudinal wake vortices shows a flow pattern which, in a central vertical plane of the track, has a strong flow speed component directed vertically downward (i.e. towards the track) and, down at track level, has a strong flow speed component directed laterally outward. Depending on the vehicle speed these pronounced wake vortices lead to considerable flow speeds and, consequently, to unacceptably high aerodynamic trackside loads on persons or objects in trackside positions. Furthermore, these pronounced wake vortices generate considerable drag and, consequently, an aerodynamically unfavourable behaviour of the vehicle in this respect as well.

Although the active flow separation devices disclosed in DE 199 12 144 C1 and JP 01074160 A may, eventually, help to reduce the extent of these longitudinal wake vortices, they show the disadvantage that, on the one hand, due to their active design they are of relatively complex design adding to the overall cost of the vehicle. On the other hand, if designed as a passive, permanently aerodynamically effective component, these comparatively large flow separation devices induce considerable drag when located at the leading end of the vehicle. In other words, such a passive variant would lead to a leading end flow pattern which is economically unfavourable for vehicles intended for a bidirectional operation.

In order to overcome the above disadvantages EP 2 246 233 A1 (the entire disclosure of which is incorporated herein by reference) discloses a generic rail vehicle, wherein a flow separation step forming a pronounced flow separation edge is provided in the roof area of the head section of the vehicle above the front window of the vehicle. Such a flow separation step, in particular in the context of double deck vehicles, provides persistent separation of the airflow from the outer skin of the vehicle when located at the trailing end of the vehicle, and at least to some extent reduces formation of the pronounced longitudinal wake vortices, while generating a modification of the static pressure distribution over the outer skin of the trailing end section leading to reduced drag as well as reduced aerodynamic trackside loads.

Such a solution with a flow separation step may provide beneficial effects, especially in comparatively high double deck vehicles with comparatively short head sections (i.e., with vehicles having a head length HL to head height HH ratio typically well below 1, i.e. HL/HH < 1). In any case, in vehicles with comparatively slender, long vehicle head sections (having a head length HL to head height HH ratio of HL/HH ≥ 1), as they are typically used in high-speed applications, there is still a continuous need to reduce the aerodynamic drag in order to reduce the operating cost of the vehicle.

### SUMMARY OF THE INVENTION

Thus, it is an object of the present invention to at least reduce in the disadvantages outlined above, in particular, to beneficially influence the flow pattern developing at a head section of a vehicle for bidirectional operation at high travelling speeds providing low overall drag of the vehicle.

The present invention achieves this object starting from a rail vehicle according to the preamble of claim 1 by the features of the characterising part of claim 1.

The present invention is based on the technical teaching that a reduction in the overall drag of a vehicle for bidirectional operation at relatively high speeds (above 160 km/h to 200 km/h) may be achieved in a simple, cost-effective manner if a flow separation device is provided in a lower but still upward facing part of the laterally tapering head section of the vehicle. This flow separation device is located in the lower half of the vehicle, in an upward facing part of the head section, and, thus, is located (in the height direction of the vehicle) only over a certain fraction of the vehicle that is limited to the still upward facing part of the lower 50% to 65% of the vehicle height dimension.

To obtain the desired well-defined and persistent separation of an upper fraction of the airflow from the outer skin, the flow separation device must generate a situation where, at a sufficiently well-defined location of separation, a change in the course of the outer skin of the head section is sufficiently rapid, sharp and pronounced such that the flow cannot follow this change in the course of the outer skin anymore and detaches in a defined manner from the outer skin. To achieve this, the flow separation device, at least in the activated state, defines a generally concave flow separation section of the outer skin. Such a generally concave section of the outer skin, in a simple and efficient manner allows imposing a suitable direction onto the flow and to generate such a sufficiently rapid and pronounced change in the course of the (typically generally convex) outer skin in the area close to the free end of the head section. More particularly, it has been realised that, especially with vehicles having comparatively slender, long vehicle head sections (HL/HH ≥ 1) as they are typically used in high-speed applications) such a flow separation device (when located at the trailing end of the vehicle) still provides persistent and defined separation of the upper fraction of the airflow (flowing along the roof area of the vehicle) from the outer skin of the vehicle, despite its rather low location of which on the one hand at least reduces or even avoids formation of the pronounced longitudinal wake vortices and generates a modification of the static pressure distribution over the outer skin of the trailing end section leading to reduce drag as well as reduced aerodynamic trackside loads.

More precisely, it has been realised that the persistent flow separation in this lower fraction of the trailing end of the vehicle (aft of the flow separation device) generates a rise in the static pressure in the airflow passing the upper part or roof part of the outer skin which reduces the differences in the static pressure distribution (hereinafter also called static pressure distribution differences) with respect to the parts of the airflow passing the lower lateral parts of the outer skin.

This modification in the static pressure distribution goes along with a flow separation pattern develops at the trailing end of the vehicle which is completely different from the pronounced longitudinal wake vortices produced with conventional head section designs. This flow separation pattern is characterized by a relatively stable "wake bubble" dragged along with the vehicle and showing a rather calm, micro-turbulent flow within the wake bubble. The outer surface of the wake bubble substantially "continues" the outer skin of the vehicle under a continuous reduction of the cross-section of the wake bubble (in a plane perpendicular to the longitudinal direction of the vehicle) such that a smooth "reunification" of the parts of the airflow passing different parts of the vehicle surface (such as the roof part and the lateral parts) is achieved. It will be appreciated that this wake bubble flow pattern provokes considerably less drag as well as considerably less aerodynamic trackside loads than the longitudinal wake vortices of conventional vehicle head designs.

It will be appreciated in this context that the tendency to generate such pronounced longitudinal wake vortices depends on the degree of so-called boat tailing of the head section of the vehicle. The expression "boat tailing" hereby designates a design with a pronounced inward curvature of the lateral parts of the outer surface towards the trailing end of the vehicle. Consequently, the extension of the flow separation device or the fraction of the airflow passing this flow separation device, respectively, may be the smaller the higher the degree of boat tailing is selected.

Moreover, compared to the known design with the flow separation step in the roof area (i.e. the upper 30% of the vehicle height dimension), such a design has the great advantage that the upper fraction of the airflow (flowing along the roof area of the vehicle) remains still attached to the outer skin over at least the upper 40% to 50% of the head section, such that it undergoes a continuous deceleration over these at least upper 40% to 50% of the vehicle height. This continuous deceleration of the upper fraction of the airflow still attached to the outer skin results in a continuous rise in the static pressure in the flow resulting in a longitudinal resultant force acting on the outer skin of the vehicle in the direction of travel. This effect is often referred to as pressure recovery effect, and in a beneficial way reduces the overall aerodynamic drag of the vehicle. This particularly applies in comparison to the vehicles with early defined flow separation in the roof area, where this pressure recovery effect, due to the early detachment from the outer skin may only develop to a lesser extent.

Furthermore, the flow separation device may be of comparatively small size. Hence, the flow separation device, when located at the leading end of the vehicle, (if at all) only generates a comparatively moderate rise in the drag of the vehicle. This rise in the drag at the leading end is largely outweighed by the reduction of the drag provided by the (eventually identically designed) flow separation device located at the trailing end of the vehicle. Thus, in total, a considerable reduction of the overall drag of the vehicle may be achieved. This situation also allows designing the flow separation device as a passive, permanently aerodynamically effective device which considerably reduces the complexity and, consequently, the costs of such a solution.

It will be appreciated, however, that, with certain embodiments of the invention, an active solution may be selected, wherein the flow separation device is aerodynamically effective only in the activated state. This allows taking full advantage of the reduction in aerodynamic drag when the flow separation device is activated and located at the trailing end of the vehicle, while the flow separation device located at the leading end of the vehicle is deactivated.

Thus, according to one aspect of the invention there is provided a vehicle, in particular a rail vehicle, for a bidirectional operation at a nominal travelling speed above 160 km/h, in particular above 200 km/h, in a respective direction of travel comprising at least one vehicle module with a wagon body being supported on a running gear configured to run on a track defining a track level, the vehicle module defining a longitudinal direction, a transverse direction and a height direction. The wagon body has an outer skin defining a generally prismatic body section and a non-prismatic head section located at one of its ends, the vehicle module, at a transition between the body section, and the head section, having a maximum vehicle height dimension above the track level in the height direction. The wagon body, in the head section, has a flow separation section comprising a flow separation device, in particular a flow separation edge, the flow separation device, in particular, the flow separation edge, in a transversally central area of the wagon body and at least in an activated state, being located at a flow separation height in the vehicle height direction. The flow separation device provides a persistent separation of an airflow from the outer skin of the wagon body when the vehicle module runs at the travelling speed with the head section forming a trailing end of the vehicle module. The flow separation device, at least in the activated state, defines a generally concave flow separation section of the outer skin, the flow separation height ranging up to 50% to 65% of the vehicle height dimension, preferably from 25% to 50% of the vehicle height dimension, more preferably from 30% to 46% of the vehicle height dimension, even more preferably from 33% to 39% of the vehicle height dimension.

It will be appreciated that the flow separation height typically selected as a function of the overall shape and/or dimensions of the head section, as well as the specific design of the flow separation device. With preferred embodiments of the invention, the flow separation height ranges up to 2500 mm, preferably from 900 mm to 1850 mm, more preferably from 1150 mm to 1650 mm, even more preferably from 1275 mm to 1750 mm.

With preferred embodiments of the invention, the flow separation device is designed as a permanently effective passive device. In these cases, the flow separation height preferably ranges from 1100 mm to 1700 mm, preferably from 1200 mm to 1500 mm, more preferably from 1300 mm to 1400 mm, or.

With other embodiments of the invention, the flow separation device, may be designed as a selectively activatable device, in particular a generally plate shaped device. In these cases, preferably, the flow separation height ranges from 900 mm to 2500 mm, preferably from 1300 mm to 1900 mm, more preferably from 1600 mm to 1750 mm.

It will be appreciated that the location of the flow separation device in the height direction and the longitudinal direction depends on the actual geometry of the head section, in particular, the curvature and inclination of the outer skin of the nose section. Preferably, the flow separation device is located comparatively low and/or comparatively close to the free end of the head section in order to keep the roof fraction of the airflow attached to the outer skin up to an optimum point to take maximum advantage of the pressure recovery effect. In this context, it should be noted that this does not necessarily mean that the airflow has to remain attached to the outer skin as long as possible, since, at some point (due to the increasingly tapering shape of the vehicle nose), the tendency of the flow to randomly detach from the outer skin considerably increases, such that flow separation device loses its efficiency in preventing the wake vortices. Hence, with the present invention, an optimum area has been established for the location of the flow separation device, both, in the height direction and in the longitudinal direction.

Typically, the flow separation device, in particular, the flow separation edge, in a central longitudinal plane perpendicular to the transverse direction, has a nose distance in the longitudinal direction from a free end of the head section, and the head section having a maximum length in the longitudinal direction.

With certain preferred embodiments of the invention, the nose distance ranges from 0 mm to 600 mm, preferably from 30 mm to 350 mm, more preferably from 50 mm to 200 mm. In the case where the flow separation device is a permanently effective passive device, the inflection point distance preferably ranges from 0 mm to 400 mm, preferably from 75 mm to 250 mm, more preferably from 90 mm to 200 mm. In cases where the flow separation device is a selectively activatable device, in particular a generally plate shaped device, and the inflection point distance preferably ranges from 0 mm to 600 mm, preferably from 20 mm to 350 mm, more preferably from 40 mm to 200 mm;

In addition or as an alternative, depending on the specific design of the vehicle, the nose distance preferably ranges from 0% to 11%, preferably from 0% to 6%, more preferably from 1.0% to 3.5%, of the maximum length. More specifically, in cases where the flow separation device is a permanently effective passive device, the nose distance preferably ranges from 0% to 7%, preferably from 1% to 4.5%, more preferably from 1.5% to 3.5%, of the maximum length. In cases where the flow separation device is a selectively activatable device, in particular a generally plate shaped device, the nose distance preferably ranges from 0% to 12%, preferably from 0% to 6%, more preferably from 0.5% to 3.5% of the maximum length.

It will be appreciated that the flow separation device may be of any design suitable to achieve the desired beneficial influence on the flow pattern at the leading end and the trailing end as it has been outlined above. In particular, the flow separation device may be a planar or arbitrarily curved component, providing the desired flow pattern, in particular the wake bubble flow pattern as outlined above.

Typically, especially in high speed rail vehicles with slender, elongated head sections (HL/HH ≥ 1), a forerun part of the outer skin located on a side of the flow separation device facing away from a free end of the head section, in a central longitudinal plane perpendicular to said transverse direction, imposes a flow direction onto the airflow in the forerun of the flow separation device, which is inclined with respect to the longitudinal direction (down towards the track) is by 20° to 60°, preferably by 30° to 50°, more preferably by 35° to 45°. Furthermore, preferably, the flow separation device, at least in the activated state, comprises a first ramp section located adjacent to the flow separation edge on a side of the flow separation edge facing away from a free end of the head section.

With certain preferred embodiments of the invention, the first ramp section, in a central longitudinal plane perpendicular to the transverse direction, has a tangent starting point at the outer skin located at a distance of 150 mm from the flow separation edge. The first ramp section defines a first tangential direction starting at the tangent starting point, being tangent to the flow separation edge and pointing towards a free end of the head section. The first tangential direction is preferably inclined with respect to the longitudinal direction by a first angle of inclination, the first angle of inclination ranging from -25° to +25°, preferably from -15° to +20°, more preferably from 0° to +15°, a positive value of the first angle of inclination being representative of the first tangential direction having a component towards the track. By this means, a configuration is achieved, where the sharp, rapid and pronounced change in the course of the outer skin as outlined above may be generated at the flow separation edge, such that the flow cannot follow this change in the course of the outer skin anymore and detaches in a defined manner from the outer skin.

With certain preferred embodiments, the outer skin defines a first median surface of the first ramp section and the first median surface, in a central longitudinal plane perpendicular to the transverse direction, at its transition to the flow separation edge, defines a second tangential direction pointing towards a free end of the head section. The second tangential direction is inclined with respect to the longitudinal direction by a second angle of inclination, the second angle of inclination, preferably ranging from -25° to +25°, preferably from -10° to +15°, more preferably from -5° to +10°, a positive value of the first angle of inclination being representative of the second tangential direction having a component towards the track. By this means, as well, a configuration is achieved, where the sharp, rapid and pronounced change in the course of the outer skin as outlined above may be generated at the flow separation edge, such that the flow cannot follow this change in the course of the outer skin anymore and detaches in a defined manner from the outer skin.

It will be appreciated in this context that the median surface typically designates a (eventually, purely virtual) smoothly curved surface where the sum of the distances between the surface points of the outer skin and the surface points of the median surface (along the respective surface normal of the median surface) is minimized, typically is substantially zero. In other words, the median surface is a surface that describes the overall shape of the ramp section neglecting local surface irregularities or the like having a geometry or other configuration which is too small to cause a noticeable persistent impact on the flow in this area.

With further preferred embodiments of the invention, the first ramp section, in a central longitudinal plane perpendicular to the transverse direction, is configured to impose, at the flow separation edge, a first flow direction onto a first airflow flowing, at the nominal operating speed, along the outer skin in a direction parallel to the central longitudinal plane towards the free end. The first flow direction is inclined with respect to the longitudinal direction by a third angle of inclination, the third angle of inclination, preferably, ranging from -25° to +25°, preferably from -15° to +20°, more preferably from 0° to +15°, a positive value of the third angle of inclination being representative of the first airflow having a flow component towards the track. By this means, as well, a configuration is achieved, where the sharp, rapid and pronounced change in the course of the outer skin as outlined above may be generated at the flow separation edge, such that the flow cannot follow this change in the course of the outer skin anymore and detaches in a defined manner from the outer skin.

It will be appreciated that the respective angle of inclination as outlined above, typically, depends on the overall shape of the head section in the area of the flow separation device, in particular, on the forerun part of the resulting forerun flow direction, as well as the design of the flow separation device itself in order to achieve the desired persistent flow separation at the flow separation edge. More precisely, preferably, the concave flow separation section is configured (in particular, of sufficient size and/or sufficiently pronounced shape) such that a sufficiently large part of the boundary layer of the airflow undergoes a noticeable change in direction (compared to the forerun flow direction), which, when passing the area of the flow separation edge with its sharp and pronounced change in the course of the outer skin, avoids that the flow may follow the course of the outer skin and persistently detaches from the outer skin. In other words, basically, the ramp section of the concave flow separation section is preferably configured to impose a flow direction onto the flow catapulting the flow away from the outer skin at the flow separation edge.

Moreover, the respective angle of inclination preferably selected as a function of the basic principle of operation of the flow separation device. More specifically, in case the flow separation device is a passive and, hence, typically permanently aerodynamically effective component, these angles are selected such that upon reverse operation (i.e. operation with the flow separation device, being located at the leading end of the vehicle), an increase in the aerodynamic drag caused by the flow separation device is minimized.

It will be appreciated in this context that, eventually, at such operation with a reversed direction of travel, a temporary separation of the flow from the outer skin may also ensue. As long as the flow separation (at the leading end of the vehicle) is not persistent, i.e. as long as the flow sufficiently rapidly re-attaches to the outer skin in order to keep the increase in aerodynamic drag as low as possible. It will be further appreciated that the placement of the flow separation device in the lower half of the vehicle is particularly beneficial in this context, since such a detachment of the flow at a very early point close to the leading end of the vehicle guarantees that the overall flow conditions provide a sufficiently high amount of energy to the locally detached flow promoting rapid reattachment to the outer skin.

Hence, preferably, in cases where the flow separation device is a permanently effective passive device, the first angle of inclination and/or the third angle of inclination ranges from-5° to +25°, preferably from 0° to +20°, more preferably from +1° to +15°. In addition or as an alternative in these cases, the second angle of inclination ranges from -5° to +15°, preferably from 0° to +10°, more preferably from +1° to +5°.

In cases where the flow separation device is a selectively activatable device, in particular a generally plate shaped device, the first angle of inclination and/or the second angle of inclination and/or the third angle of inclination preferably range from -30° to +20°, preferably from -20° to +15°, more preferably from -10° to +10°. It will be appreciated that, here, temporary detachment of the flow at the leading end of the vehicle may be fully avoided by simple deactivation of the flow separation device.

It will be appreciated that the flow separation device may be of any desired shape, defining the flow separation edge as outlined above. With certain preferred embodiments of the invention, the flow separation device comprises a second ramp section located adjacent to the flow separation edge on a side of the flow separation edge facing towards the free end of the head section. Preferably, the outer skin defines a second median surface of the second ramp section and the second median hull surface, in the central longitudinal plane, at its transition to the flow separation edge, defining a third tangential direction pointing away from the free end of the head section, the third tangential direction, in a sector facing in the height direction, being inclined with respect to the first tangential direction by 60° to 160°, preferably by 90° to 150°, more preferably by 110° to 140°.

In addition or as an alternative, the second ramp section, in the central longitudinal plane, is configured to impose, at the flow separation edge, a second flow direction onto a second airflow flowing, at the nominal operating speed, along the outer skin in a direction parallel to the central longitudinal plane away from the free end of the head section, the second flow direction, in a sector facing in the height direction, being inclined with respect to the first flow direction by 60° to 160°, preferably by 90° to 150°, more preferably by 110° to 140°.

In both variants, in a very simple manner a configuration may be achieved, where the sharp, rapid and pronounced change in the course of the outer skin as outlined above may be generated at the flow separation edge, such that the flow cannot follow this change in the course of the outer skin anymore and detaches in a defined manner from the outer skin.

It will be appreciated that the basic property of the flow separation device is to provide persistent flow separation from the outer skin of the wagon body or, in other words, that re-contacting between the separated flow and the outer skin at the trailing end is reliably avoided when the vehicle runs at its travelling speed. In the embodiments with the first and second ramp sections, this persistent flow separation is preferably provided by a design with a flow separation step formed by the first and second ramp sections which, on the one hand, provokes a flow that has a flow direction at the flow separation edge and which, on the other hand, has the second ramp section that is located (in this flow direction) after the flow separation edge and that is inclined with respect to this flow direction preferably by at least 15° such that the transverse distance (i.e. the distance in a direction transverse to the flow direction) between the separated flow and the second ramp section quickly increases as the flow propagates. It will be appreciated in this context that the second ramp section does not necessarily have to be a straight wall element but may be arbitrarily curved (in one or two directions) or may be an (arbitrary) combination of curved and/or straight sections.

It will be appreciated that the concave flow separation section may basically be of any desired suitable design, in particular, sufficient size, to impose the desired change in direction (compared to the forerun flow direction) on a sufficiently large part of the boundary layer of the airflow as outlined above (catapulting the airflow away from the outer skin at the flow separation edge). Preferably, the flow separation section, in a central longitudinal plane perpendicular to the transverse direction, has an inflection point at which, in particular, a curvature of the outer skin changes its sign and/or at which a kink is formed in the outer skin in order to obtain the generally concave shape of the outer skin. This inflection point, in the central longitudinal plane, has an inflection point distance from the flow separation edge, , while the head section has a maximum head length in the longitudinal direction. Preferably, the inflection point distance ranges from 50 mm to 900 mm, preferably from 150 mm to 800 mm, more preferably from 150 mm to 500 mm. By this means a size of the flow separation section may be obtained, which generates an impact on the airflow that is sufficiently large to catapult it away from the outer skin.

Here again, preferably, the inflection point distance is a function of the general working principle of the flow separation device. Hence, preferably, in cases where the flow separation device is a permanently effective passive device, and the inflection point distance ranging from 50 mm to 700 mm, preferably from 120 mm to 600 mm, more preferably from 150 mm to 500 mm. In other cases, where the flow separation device is a selectively activatable device, in particular a generally plate shaped device, the inflection point distance preferably ranges from 50 mm to 900 mm, preferably from 250 mm to 700 mm, more preferably from 300 mm to 600 mm.

In addition or as an alternative, the inflection point distance preferably ranges from 0.7% to 15%, preferably from 2.5% to 13.5%, more preferably from 2.5% to 8.5%, of the maximum head length. Again, in cases where the flow separation device is a permanently effective passive device, preferably, the inflection point distance ranges from 0.7% to 12%, preferably from 2% to 10%, more preferably from 2.5% to 8.5%, of the maximum head length. In cases where the flow separation device is a selectively activatable device, in particular a generally plate shaped device, the inflection point distance preferably ranges from 0.5% to 15%, preferably from 4% to 13.5%, more preferably from 5% to 10% of the maximum head length.

By this means, in any of the above cases, a size of the flow separation section may be obtained, which generates an impact on the airflow that is sufficiently large to catapult it away from the outer skin.

The flow separation device may have any appropriate design providing the desired persistent flow separation. For example, a (passive or active) design may be chosen creating a flow of a flow separation medium at the location of the flow separation device at the outer skin of the vehicle, the flow of the flow separation medium (in its interaction with the airflow along the outer skin) inducing or provoking separation of the airflow from the outer skin. Any suitable flow separation medium may be chosen. For example, a suitable flow of pressurized air may be provided through one or more suitably shaped openings within the outer skin of the vehicle.

Preferably, the flow separation device comprises a sharp, pronounced flow separation edge, the flow separation edge having at least one edge section defining a tangential direction in each point of the edge section. The flow separation edge, in the edge section and in a sectional plane perpendicular to the tangential direction, has a radius of curvature of less than 15 mm, preferably of less than 10 mm, more preferably of less than 5 mm. By this means, a sharp and pronounced flow separation edge is achieved guaranteeing persistent flow separation in a simple and efficient manner.

The edge section with the sharp flow separation edge may extend only over a part of the flow separation edge. Preferably, the edge section with the sharp flow separation edge extends over at least 60% of the flow separation edge, preferably over at least 80% of the flow separation edge, more preferably over substantially 100% of the flow separation edge, leading to stable and reliable flow separation properties of the flow separation edge.

The flow separation device may have any suitable arrangement on the outer skin of the vehicle. With preferred embodiments of the invention, the flow separation device comprises a flow separation edge extending, in particular substantially continuously extending, from one lateral surface to an opposing lateral surface of the wagon body. By this means the formation of the desired flow separation pattern with an aerodynamically advantageous shape of the wake bubble is achieved.

Aerodynamically particularly beneficial configurations may be achieved in cases where the head section is provided with a crosswind flow separation devices laterally extending in the longitudinal direction along the upper side of the head section as they are known from EP 2 383 161 A1 (the entire disclosure of which is Incorporated herein by reference). Preferably, the flow separation edge continues, in particular in a substantially seamless manner, at least one such crosswind flow separation edge extending in said longitudinal direction along at least one lateral surface of the wagon body. Preferably, the at least one crosswind flow separation edge extends, in said longitudinal direction, along a front window of the vehicle, in particular, up to a roof section of the wagon body.

It will be further appreciated that the flow separation device, basically, may have any desired shape, in particular, at least section wise and asymmetric shape (with respect to the central longitudinal plane of the vehicle) may be selected in case it is desired to obtain, for example, a specific flow separation pattern or flow pattern within the wake of the vehicle. Typically, however, it is preferred that the flow separation device is substantially symmetric with respect to a central longitudinal plane perpendicular to the transverse direction.

The flow separation edge, basically, may have any suitable dimension the transverse direction of the vehicle, which is sufficient to provide persistent separation of the passing airflow and to avoid the undesired double vortex flow pattern as outlined above. Preferably, a perpendicular projection of the flow separation edge onto a transverse plane perpendicular to the longitudinal direction has a maximum edge width Wsₘₐₓ in the transverse direction, ranging from 500 mm to 2500 mm, preferably from 700 mm to 1900 mm, more preferably from 800 mm to 1850 mm.

Again, in cases where the flow separation device is a permanently effective passive device, the maximum edge width Wsₘₐₓ preferably ranges from 500 mm to 2500 mm, preferably from 1200 mm to 1900 mm, more preferably from 1300 mm to 1850 mm. In cases where the flow separation device is a selectively activatable device, in particular a generally plate shaped device, the maximum edge width Wsₘₐₓ preferably ranges from 500 mm to 1100 mm, preferably from 700 mm to 1000 mm, more preferably from 750 mm to 900 mm.

In addition or as an alternative, in cases where a perpendicular projection of the flow separation edge onto a transverse plane perpendicular to the longitudinal direction, has a maximum edge width Wsₘₐₓ in the transverse direction and the outer skin, in the transverse direction, has a maximum wagon body width Wₘₐₓ, the maximum wagon body width Wₘₐₓ ranging from 15% to 70%, preferably from 25% to 65% more preferably from 45% to 65% of the maximum wagon body width Wₘₐₓ.

In cases where the flow separation device is a permanently effective passive device the maximum edge width Wsₘₐₓ preferably ranges from 15% to 70%, preferably from 40% to 65%, more preferably from 45% to 60%, of the maximum wagon body width Wₘₐₓ,. In cases where the flow separation device is a selectively activatable device, in particular a generally plate shaped device, the maximum edge width Wsₘₐₓ preferably ranges from 15% to 40%, preferably from 25% to 35%, more preferably from 27% to 32% of the maximum wagon body width Wₘₐₓ.

By this means, in any of the above cases, a size of the flow separation section may be obtained, which generates an impact on the airflow that is sufficiently large to catapult it away from the outer skin.

As mentioned above, the flow separation device according to the invention may be a passive or an active device. Thus, with certain preferred embodiments of the invention, the flow separation edge forms a permanently aerodynamically active component of the flow separation device. For example, the flow separation edge may be formed on a rigid component rigidly connected to the wagon body. However, with other preferred embodiments of the invention, the flow separation edge forms a selectively aerodynamically activatable component of the flow separation device. For example, in certain cases, the flow separation edge may be formed on a movable component (e.g. in a configuration similar to the ones disclosed in DE 199 12 144 C1 and JP 01074160 A).

The flow separation device may be of any suitable design providing the desired flow separation, in particular, the desired flow separation pattern forming the wake bubble mentioned above. For example, the flow separation device may be formed by a separate component connected to the wagon body. In particular, the flow separation device may be formed by a comparatively small element (even arranged in a slight distance from the outer skin of the wagon body) forming a flow separation edge. Such an element, for example, may have any desired and suitable cross-section. In particular, a cross-section similar to the one of an airfoil may be chosen.

Hence, with certain embodiments of the invention, the flow separation edge at least in part is formed by a permanently aerodynamically active component of the flow separation device. Preferably, the flow separation edge at least in part is formed by a substantially rigid part of the outer skin. Moreover, as mentioned, the flow separation device may be of any desired shape. Preferably, the flow separation device at least in part is formed by a depression in the outer skin, the depression, in particular, being substantially sickle-shaped. By this means, a particularly beneficial design may be achieved, which integrates comparatively smoothly into the elongated, slender and continuously tapering geometry of the head section while nevertheless, being highly efficient in obtaining the desired persistent separation of the airflow.

It will be appreciated that, in some cases, it may be provided that the flow separation device, despite being a passive component, is deactivated when located at the leading end of the vehicle by simply covering the generally concave flow separation section with a suitable cover. Hence, preferably, the flow separation device comprises an interface unit configured to mount a cover device configured to cover flow separation device in a deactivated state. Preferably, such a cover is shaped such that it substantially continues the smooth surface of the surrounding outer skin of the wagon body, thereby potentially avoiding any rise in the aerodynamic drag at the leading end of the vehicle due to the flow separation device.

In further preferred embodiments of the invention, the flow separation device is selectively activatable component being aerodynamically effective in its activated state. To this end, they flow separation device may comprise a pivotable flap unit having an activated state and a deactivated state. The pivotable flap unit, in the deactivated state, preferably forms a part of the outer skin substantially flush with adjacent parts of the outer skin. In the activated state, the pivotable flap unit protrudes from the outer skin to form, at a free end, the flow separation edge of the flow separation device.

In addition or as an alternative, the flow separation device may comprise a retractable unit having an activated state and a deactivated state. The retractable unit, in the deactivated state, is retracted, in particular substantially entirely retracted, into the outer skin. This retracting may ensue, in particular, in such a way that a substantially flush outer skin is formed in an area of the deactivated flow separation device, such that in the deactivated state any rise in the aerodynamic drag at the leading end of the vehicle due to the flow separation device may potentially be avoided.

In the activated state, the retractable unit protrudes from the outer skin to form, at a free end, the flow separation edge of the flow separation device. Basically, the retractable unit may be of any desired and suitable shape. Preferably, the retractable unit comprises a substantially plate shaped flow separation element; the flow separation element, in particular, forming an at least section wise planar and/or at least section wise curved flow guiding surface, typically forming at its free end, the flow separation edge.

The desired low drag flow separation pattern may be achieved by any suitable design of the flow separation device providing a persistent separation of a first airflow from the outer skin of the wagon body in conjunction with a suppression of the pronounced longitudinal wake vortices as outlined above. Preferably, the flow separation device is arranged such that the persistent separation of the airflow from the outer skin of the wagon body extends over a flow separation area of the outer skin, the flow separation area being of sufficient size to generate a rise in a static pressure distribution within said separated airflow, which is adapted to at least reduce, in particular substantially avoid, the formation of two pronounced longitudinal wake vortices in a wake of the wagon body. Preferably, the rise in the static pressure distribution within said separated airflow is selected as a function of a static pressure distribution in an adjacent lateral airflow over a lateral part of the outer skin of the wagon body located adjacent to the flow separation device.

The flow separation device according to the invention may be used exclusively on one end of the vehicle. This may be the case, for example, in situations where the vehicle module is a non-motorized unit used in a train configuration with a locomotive (or the like) located at the other end of the train and providing the traction power. In this case the overall reduction of the drag results over time (the pronounced drag reduction achieved during trailing end operation overtime outweighing the at most moderate drag increase during leading end operation).

However, preferably, both ends of the vehicle exhibit flow separation devices according to the invention. Both flow separation devices at both ends preferably are of identical design to provide, in a simple manner, identical drag behavior of the vehicle in both directions of travel. Thus, preferably, the flow separation device is a first flow separation device located at a first end of the vehicle, a second flow separation device being located at an opposite second end of the vehicle. The second flow separation device preferably is substantially identical to the first flow separation device.

The present invention may be used in the context of arbitrary types of vehicles. Preferably, the vehicle comprises a plurality of separate vehicle modules articulated to each other. The effects of the present invention in overall vehicle drag reduction are particularly beneficial with vehicles having elongated and slender, typically continuously tapering, head sections as they are conventionally used in high-speed applications. Hence, preferably, the head section, in the longitudinal direction, has a maximum head length HL, said maximum head length HL being at least 100%, preferably at least 125%, more preferably at least 150%, more preferably 125% to 175%, of the maximum vehicle height dimension HH.

With preferred embodiments of the invention, the head section comprises a front window unit comprising a front window frame unit, the front window frame unit, in particular, comprising a wiper unit. The flow separation device is preferably spaced apart from the front window unit, in particular, from the wiper unit. Furthermore, preferably, the flow separation device is located, in the height direction, below the front window unit, in particular, below the wiper unit. In addition or as an alternative, the flow separation device is located between the front window unit, in particular, the wiper unit, and a free end of the wagon body. In any of these cases, the flow remains attached to the upper part of the head section over a comparatively long fraction of the head section, which is beneficial in terms of the pressure recovery effect, while still avoiding the undesired double vortex wake flow pattern by inducing, just in time, the defined detachment of the flow at the flow separation device.

The present invention further relates to a method of operating a vehicle according to the invention, the method comprising operating the vehicle in a first direction of travel, the flow separation device being activated and located at a trailing end of the vehicle and/or deactivating the flow separation device and operating the vehicle in a second direction of travel, wherein the flow separation device is located at a leading end of the vehicle.

Further embodiments of the present invention will become apparent from the dependent claims and the following description of preferred embodiments which refers to the appended figures.

### BRIEF DESCRIPTION OF THE DRAWINGS

- Figure 1: is a schematic perspective view of a preferred embodiment of a vehicle according to the present invention which may be operated according to a preferred embodiment of the method according to the present invention;
- Figure 2: is a schematic perspective view of a part of the vehicle of Figure 1;
- Figure 3: is a schematic top view of a part of the vehicle of Figure 1;
- Figure 4: is an enlarged schematic side view of the head section of the vehicle of Figure 1;
- Figure 5: is a schematic perspective view of a part of the vehicle of Figure 1 operated at its nominal speed;
- Figure 6: is a schematic perspective view of a head section of a vehicle without the flow separation device according to the invention and running at the nominal speed of the vehicle of Figure 1;
- Figure 7: is a schematic perspective view of a nose section of a further preferred embodiment of the vehicle according to the invention;
- Figure 8: is a schematic perspective view of a nose section of a further preferred embodiment of the vehicle according to the invention;
- Figure 9: is a schematic perspective view of a nose section of a further preferred embodiment of the vehicle according to the invention;
- Figure 10: is a schematic perspective view of a nose section of a further preferred embodiment of the vehicle according to the invention;
- Figure 11: is a schematic side view of a further preferred embodiment of a vehicle according to the present invention;
- Figure 12: is a schematic perspective view of a nose section of the vehicle of Figure 11;
- Figure 13: is a schematic side view of a further preferred embodiment of a vehicle according to the present invention;
- Figure 14: is a schematic perspective view of a nose section of the vehicle of Figure 13.

### DETAILED DESCRIPTION OF THE INVENTION

### First embodiment

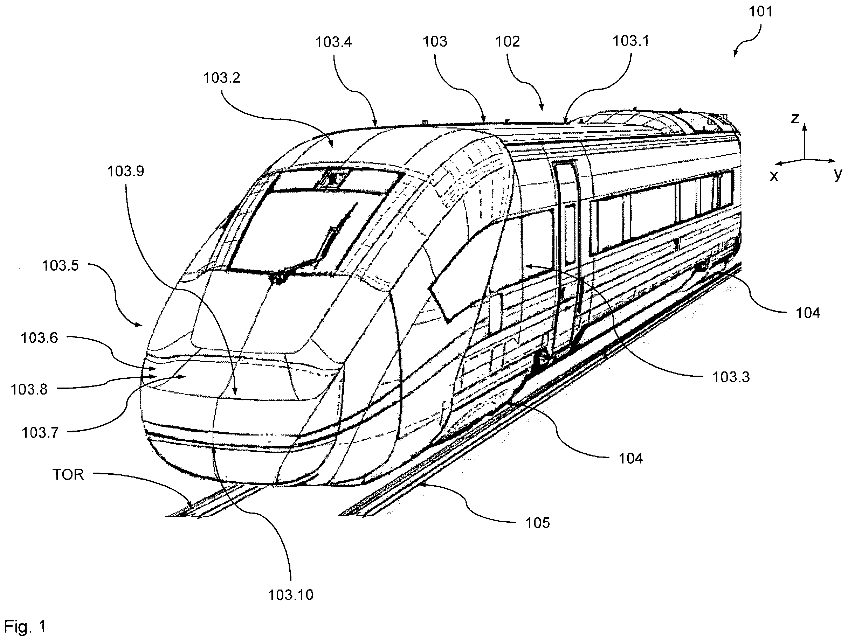

With reference to Figures 1 to 6 a preferred embodiment of a rail vehicle 101 according to the present invention comprising a vehicle module 102 will now be described in greater detail. To facilitate understanding of the following description an xyz coordinate system will be used, the x-direction designating the longitudinal direction of the vehicle module 102, the y-direction designating the transverse direction of the vehicle module 102 and the z-direction designating the height direction of the vehicle module 102.

The vehicle module 102 forms an end car of the rail vehicle 101 which is a high speed train intended for bidirectional operation in a regional public transportation system. In the embodiment shown, the train 101 is composed of a plurality of vehicle modules, wherein the outer shape of the other end car is a substantially identical to the outer shape of the vehicle module 102. However, it will be appreciated that, with other embodiments of the invention, any other outer shape of the other end car may be chosen.

The train 101 has a nominal travelling speed above VN = 180 km/h, i.e., under normal operating conditions, the train 101 is intended to run at this travelling speed on suitable track sections between the stations of the railway net it is operated on. However, it will be appreciated that, with other embodiments of the invention, any other travelling speed starting at 120 km/h may be selected. With preferred variants of the invention, the train has a (medium-speed to high-speed) travelling speed range from 120 km/h to 380 km/h, preferably from 180 km/h to 250 km/h, since, in these travelling speed ranges, the benefits of the invention develop to the largest extent.

Figures 1 to 5 are schematic views of parts of the vehicle module 102 which comprises a single deck wagon body 103 for transporting passengers supported at both of its ends on a respective running gear 104 (e.g. a bogie) running on a track 105 defining a track level TOR (top of rail).

The wagon body 103 has a prismatic body section 103.1 (i.e. a body section having a substantially identical cross section in a plane perpendicular to the longitudinal direction at each point along the longitudinal direction) and a non-prismatic head section 103.2 defining an outer skin 103.4 of the wagon body 103. The transition (in some cases also forming a mechanical interface) between the prismatic body section 103.1 and the non-prismatic head section 103.2 starts in a plane 103.3 perpendicular to the longitudinal direction.

It will be appreciated in this context that, in the present embodiment, the transition is not planar, i.e. certain lateral wall sections of the head section 103.2 continue the prismatic shape of the prismatic body section 103.1 beyond plane 103.3. However, with other embodiments of the invention, this transition may have any other suitable shape and orientation in space.

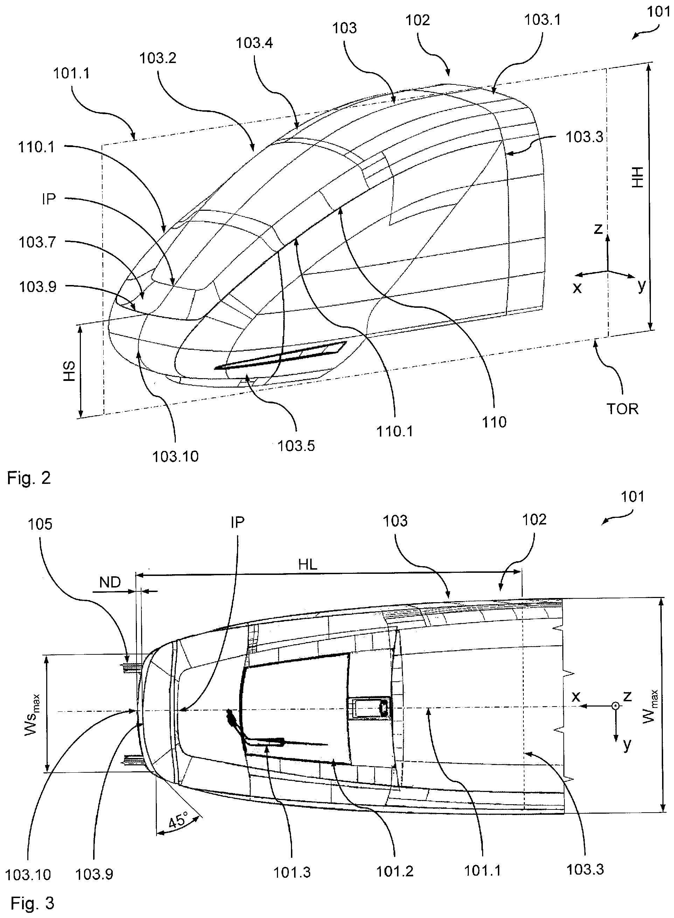

The head section 103.2 is a comparatively slender, elongated and continuously tapering vehicle head section which has a head length HL of 5915 mm (i.e. a head length dimension in the longitudinal direction between the transition plane 103.3 and its foremost nose tip, see Figure 3) and a head height HH of 3870 mm (i.e. a head height dimension in the height direction between the rooftop at the transition plane 103.3 and the track level TOR, see Figure 2). Hence the head section 103.2 has a head length HL to head height HH ratio of HL/HH > 1, more precisely of HL/HH = 1.5, as it is typical for vehicles used in high-speed applications.

As can be seen, in particular, from Figures 1 to 5, in a nose section 103.5 of the head section 103.2, a flow separation section 103.6 is formed. This flow separation section 103.6 comprises a flow separation device 103.7 in the form of a generally sickle shaped and generally concave depression 103.8 formed in the outer skin 103.4 of the wagon body 103 in the area of the nose section 103.5. As will be explained in further detail below, if the head section 103.2 is located at the trailing end of the vehicle 101, the flow separation device 103.7 (at least at the nominal travelling speed of the vehicle 101) provides persistent separation of a first airflow 106.1 from the outer skin 103.4, the first airflow 106.1 forming the roof section part of the airflow 106 flowing along the outer skin 103.4.

As can bee seen from Figures 1 to 5, the flow separation device 103.7 comprises a sharp flow separation edge 103.9 extending, in the transverse direction (y-axis), over a major fraction of the nose section 103.5. In the embodiment shown, the flow separation device 103.7 is arranged such that the flow separation edge 103.9 is a substantially planar structure defining a plane of main extension of the flow separation edge 103.9. It will be appreciated however that, with other embodiments of the invention, any other non-planar shape of the flow separation edge may be provided.

As can be seen in particular from Figure 1 and 3, the flow separation device 103.7 (in the height direction of the vehicle) is located in the lower half of the vehicle 101, in a fraction of the vehicle 101 that is limited to the still upward facing part of the lower 50% of the vehicle height dimension HH.

As will be explained in greater detail below, the flow separation device 103.7, at least at the nominal operating speed of the vehicle 101 and above, causes a well-defined and persistent separation of the airflow 106 from the outer skin 103.4 of the vehicle 101. To this end, the flow separation device 103.7 generates, at the flow separation edge 103.9, a change in the course of the outer skin 103.4 of the head section 103.2 that is sufficiently rapid, sharp and pronounced such that the upper fraction 106.1 of the airflow 106 (flowing along the roof area of the vehicle 101) cannot follow this change in the course of the outer skin 103.4 anymore and detaches in a defined manner from the outer skin 103.4.

It is to be noted in this context that (unless explicitly stated to the contrary) any statement made with respect to the flow along the outer skin 103.4 of the vehicle relates to the fraction of the boundary layer of the flow along the outer skin 103.4 which is decisive on the behavior of the flow, in particular on the fact if the flow detaches from the outer skin or not.

The persistent detachment is achieved, among others, by the generally concave flow separation section 103.6 (also referred to as flow separation cavity 103.6 in the following) that is formed by the flow separation device 103.7 in the outer skin 103.4. Despite the surrounding generally convex outer skin 103.3 of the nose section 103.5, the generally concave flow separation section 103.6 of the outer skin 103.4 imposes a change in the flow direction onto the passing upper flow fraction 106.1 which, when re-entering the generally convex part of the outer skin 103.3 of the nose section 103.5 downstream of the flow separation edge 103.9 leads to the result that the upper flow fraction 106.1 at this point experiences a rapid and pronounced change in the course of the outer skin 103.4 which it is unable to follow such that, ultimately, the flow detaches persistently from the outer skin 103.4. Hence, in other words, the flow separation cavity 103.6 is designed, in particular, is of sufficient size, to impose the desired change in direction on a sufficiently large part of the upper airflow fraction 106.1 to literally catapult the upper airflow fraction 106.1 away from the outer skin 103.4 at the flow separation edge 103.9.

As can be seen from Figure 2, the flow separation device 103.7, more precisely the flow separation edge 103.9, in a transversally central area of the wagon body, in particular, in a central longitudinal plane 101.1, has a flow separation height HS above the track level TOR of 1370 mm, which corresponds to roughly 35% of the head height HH.

As can be further seen from Figure 3, the flow separation device 103.7, more precisely, the flow separation edge 103.9, in the central longitudinal plane 101.1, has a nose distance ND in the longitudinal direction from the nose tip 103.10 (i.e. the free end) of the head section 103.2, which is ND = 192 mm, and, hence, 3.3% of the head length HL.

The comparatively low and forward arrangement of the flow separation edge 103.9 close to the lower third of the vehicle module 102 and close to the nose tip 103.10 has several advantages.

On the one hand, as had been outlined above, compared to the design known from EP 2 246 233 A1 with a flow separation step located in the roof area (i.e. the upper 30% of the vehicle height dimension), such a design has the great advantage that the upper airflow fraction 106.1 remains still attached to the outer skin over more than the upper 50% of the head section 103.2, such that it undergoes a continuous deceleration over this fraction of the vehicle height HH. This continuous deceleration of the upper airflow fraction 106.1 still attached to the outer skin 103.4 results in a continuous rise in the static pressure in the upper airflow fraction 106.1 resulting in a longitudinal force acting on the outer skin 103.4 in the direction of travel. This effect, typically referred to as pressure recovery effect, in a beneficial way reduces the overall aerodynamic drag of the vehicle 101. This particularly applies in comparison to the vehicles with early defined flow separation in the roof area, where this pressure recovery effect, due to the early detachment from the outer skin may only develop to a lesser extent.

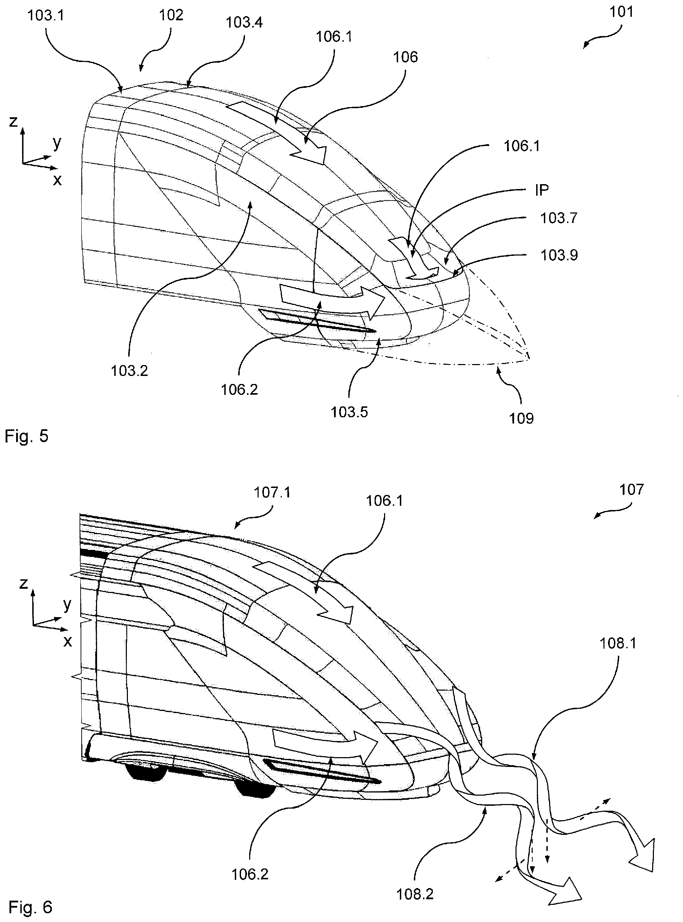

As a further beneficial consequence, the persistent flow separation at the flow separation edge 103.9 generates a modification of the wake flow pattern that goes along with a modification of the static pressure distribution over the outer skin 103.4 of the trailing head section 103.2 that avoids a slipstream behaviour of a rail vehicle 107 (with a conventional high-speed train head design without a flow separation device according to the invention) as it is shown in Figure 6. Figure 6 illustrates a schematic perspective trailing head section 107.1 of such a conventional vehicle 107 and the formation of pronounced longitudinal wake vortices 108.1, 108.2 that were mentioned initially.

More precisely, with such a vehicle 107 running at the travelling speed above 180 km/h a slipstream behaviour arises where these two pronounced longitudinal wake vortices 108.1 and 108.2 develop at the trailing end of the vehicle 107. These wake vortices 108.1, 108.2 have opposed senses of rotation such that each one of the longitudinal wake vortices shows a flow pattern which, in a central vertical plane of the track, has a strong flow speed component directed vertically downward (i.e. towards the track) and, down at track level, has a strong flow speed component directed laterally outward (as illustrated by the dashed arrows in Figure 6). Depending on the vehicle speed these pronounced wake vortices 108.1, 108.2 lead to considerable flow speeds and, consequently, to unacceptably high aerodynamic trackside loads on persons or objects in trackside positions. Furthermore, these pronounced wake vortices 108.1, 108.2 generate considerable drag and, consequently, an aerodynamically unfavourable behaviour of the vehicle 107 in this respect as well.

Contrary to such a conventional design, the flow separation device 103.7 leads to a persistent flow separation in the associated lower fraction of the trailing end of the vehicle 101 (downstream of the flow separation device 103.7) which generates a rise in the static pressure in the airflow 106.1 passing the upper part or roof part of the outer skin 103.4. This persistent flow separation reduces the static pressure distribution and momentum differences with respect to the parts 106.2 of the airflow passing the lower lateral parts of the outer skin 103.4. In conjunction with this reduction in the variance of the static pressure distribution and in the momentum differences formation of the pronounced longitudinal wake vortices 108.1, 108.2 (otherwise typically dominating at such smoothly curved high-speed vehicle trailing ends as shown in Figure 6) is avoided.

In conjunction with this modification in the static pressure distribution, downstream of the flow separation edge 103.9, a flow separation pattern develops at the trailing end of the vehicle 101 which is completely different from the pronounced longitudinal wake vortices 108.1, 108.2 produced with conventional head section designs. This flow separation pattern is characterized by a relatively stable "wake bubble" (indicated in Figure 5 by the dot-dashed contour 109) dragged along with the vehicle 101. On the inside of the wake bubble 109 a relatively calm, micro-turbulent flow prevails. The outer surface of the wake bubble 109 substantially "continues" the outer skin 103.4 of the vehicle module 102 under a continuous reduction of the cross-section of the wake bubble 109 in a plane perpendicular to the longitudinal direction (x-axis). Thus, a smooth "reunification" of the parts 106.1, 106.2 of the airflow 106 passing different parts of the vehicle surface 103.4 (such as the roof part and the lateral parts) is achieved. The wake bubble 109 has a shape that is substantially symmetric to the central longitudinal plane 101.1 (containing the x-axis and the z-axis). It will be appreciated that this wake bubble flow pattern provokes considerably less drag as well as considerably less aerodynamic trackside loads than the longitudinal wake vortices 108.1, 108.2 of conventional vehicle head designs.

It will be appreciated in this context that the static pressure distribution differences between the roof part 106.1 of the airflow 106 and the lateral parts 106.2 of the airflow 106 depend on the degree of so-called boat tailing of the head section 103.2 of the vehicle module 102. The expression "boat tailing" hereby designates a design with a pronounced inward curvature of the lateral parts of the outer surface 103.4 towards the trailing end of the vehicle module 102. Consequently, the extension of the flow separation device 103.7 or the fraction of the part of the airflow 106 passing the flow separation device 103.7, respectively, may be the smaller the higher the degree of boat tailing is selected.

Furthermore, thanks to the comparatively small size of the flow separation device 103.7 (due to its comparatively low location close to the free end of the nose section 103.5, where the head section 103.2 has already considerably tapered) the flow separation device 103.7, when located at the leading end of the vehicle, (if at all) only generates a comparatively moderate rise in the drag of the train 101. This moderate rise in the aerodynamic drag may be the result of a temporary separation of the flow (in this case coming from the free end of the nose section 103.5) from the outer skin 103.4. As long as the flow separation (at the leading end of the vehicle) is not persistent, i.e. as long as the flow sufficiently rapidly re-attaches to the outer skin 103.4 in order to keep the increase in aerodynamic drag as low as possible. It will be further appreciated that the placement of the flow separation device 103.7 in the lower half of the vehicle is particularly beneficial in this context, since such a detachment of the flow at a very early point close to the leading end of the vehicle 101 guarantees that the overall flow conditions provide a sufficiently high amount of energy to the locally detached flow promoting rapid reattachment to the outer skin 103.4. Hence, ultimately, when located at the leading end of the vehicle 101, at most only a comparatively small flow separation bubble forms in the area of the flow separation cavity 103.6.

Such a rise in the aerodynamic drag at the leading end, however, is largely outweighed by the reduction of the drag provided by the flow separation device (identically designed in the embodiment shown) located at the other, trailing end of the train 101. Thus, in total, a considerable reduction of the overall drag of the train 101 may be achieved. In the present example, compared to the otherwise identically designed vehicle 107 shown in Figure 6, an overall reduction between 1% and 1.5% in the aerodynamic drag of the train 101 may be achieved. This situation also allows designing the flow separation device 103.7 as a rigid component, i.e. a passive, permanently aerodynamically effective device which considerably reduces the complexity and, consequently, the cost of such a solution.

As can be further seen from Figure 3, the flow separation device 103.7, more precisely, the flow separation edge 103.9 is pronouncedly spaced from a lower frame element of a front window 101.2 of the vehicle as well as the associated wiper 101.3. More precisely, the distance between the flow separation device 103.7 and the front window arrangement 101.2, 101.3 is more than half the distance (in the longitudinal direction) between these components and the nose tip 103.10. Hence, disturbances which may have been introduced into the flow 106.1 by these components will already have faded when reaching the flow separation device 103.7, in particular the flow separation edge 103.9, such that proper flow separation at the flow separation edge 103.9 is guaranteed.

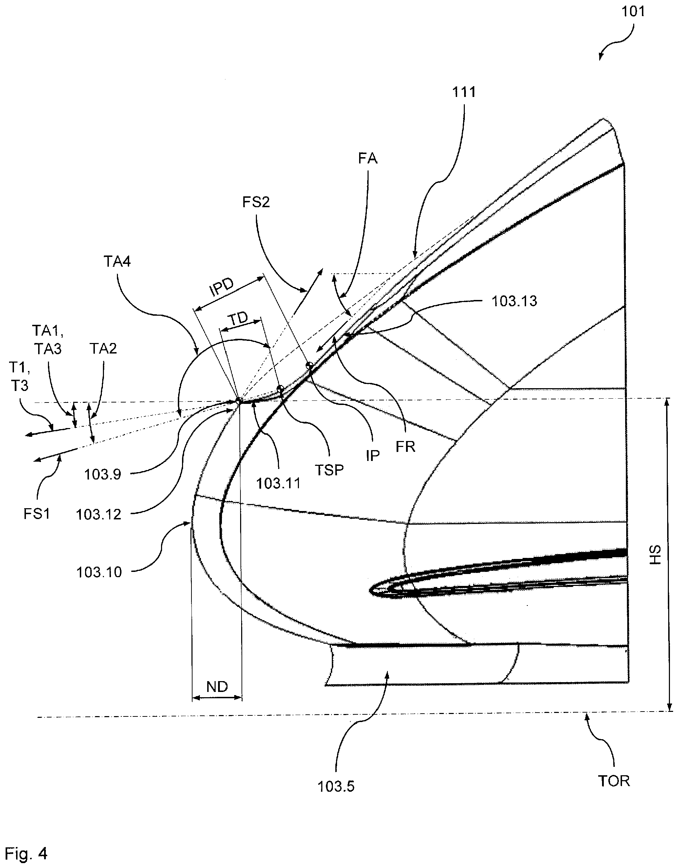

As can be seen best from the Figure 4, the flow separation device 103.7 comprises a first ramp section 103.11 and a second ramp section 103.12 of the outer skin 103.4, the flow separation edge 103.9 being formed at a conjunction of the first ramp section 103.11 and the second ramp section 103.12. The first ramp section 103.11 forms the flow separation cavity 103.6 and is located on the side of the flow separation edge 103.9 facing away from the nose tip 103.10 (i.e. located upstream of the flow separation edge 103.9 in case of operation at the trailing end of the vehicle 101). The second ramp section 103.12 descends from the flow separation edge 103.9 and is located on the side of the flow separation edge 103.9 facing towards the nose tip 103.10 (i.e. located downstream of the flow separation edge 103.9 in case of operation at the trailing end of the vehicle 101).

Furthermore, the outer skin 103.4 defines a forerun part 103.13 located on a side of the flow separation device facing away from the nose tip 103.10 which, in the central longitudinal plane 101.1, imposes a forerun flow direction FF onto the airflow fraction 106.1 in the forerun of the flow separation device 103.7, which is inclined with respect to the longitudinal direction (down towards the track) is by a forerun angle FA = 45°.

As can be seen from Figure 4, in the present example, the first ramp section 103.11, in the central longitudinal plane 101.1, has an inflection point IP at which the curvature of the outer skin 103.4 (in the central longitudinal plane 101.1) changes its sign in order to obtain the generally concave shape of the outer skin. In other words, the inflection point IP designates the start of the flow separation cavity 103.6.

The inflection point IP is located an inflection point distance IPD (in the central longitudinal plane 101.1) from the flow separation edge 103.9. In order to obtain a flow length of sufficient size to impose the desired change in direction (compared to the forerun flow direction FR) on a sufficiently large part of the boundary layer of the upper airflow fraction 106.1 (catapulting the airflow fraction 106.1 away from the outer skin 103.4 at the flow separation edge 103.9), the inflection point distance is IPD = 380 mm, such that the inflection point distance IPD is 6.5% of the head length HL.

As can be further seen from Figure 4, in the present example, the first ramp section 103.11 has a tangent starting point TSP at the outer skin 103.4 which is located between the inflection point IP and the flow separation edge 103.9 at a distance of TD = 150 mm from the flow separation edge 103.9. The first ramp section 103.11 defines a first tangential direction T1 starting at the tangent starting point TSP, being tangent to the flow separation edge 103.9 and pointing towards nose tip 103.10.

As can be further seen from Figure 4, the first tangential direction T1 is inclined with respect to the longitudinal direction by a first angle of inclination TA1 = +16° of (the positive value of the first angle of inclination TA1 being representative of the first tangential direction T1 having a component down towards the track 105).

As can be further seen from Figure 4, the first ramp section 103.11 is a substantially smooth and smoothly curved surface with substantially no (noticeable macroscopic) surface irregularities. Hence, the surface of the first ramp section 103.11 itself coincides with or forms a first median surface (as defined above) of the first ramp section 103.11. This median surface, in the central longitudinal plane 101.1, at its transition to the flow separation edge 103.9, defines a second tangential direction T2 pointing towards the nose tip. The second tangential direction T2 is inclined with respect to the longitudinal direction (x axis) by a second angle of inclination TA2 = +9° (the positive value of the second angle of inclination TA2 being representative of the second tangential direction T2 having a component down towards the track 105).

In the present example, the first tangential direction T1 substantially coincides with the first flow direction FS1 that is imposed on the upper airflow fraction 106.1 by the first ramp section 103.11 immediately when passing the flow separation edge 103.9 (at the nominal operating speed VN), along the outer skin in a direction parallel to the central longitudinal plane towards the free end. Hence, in the present example, the flow direction FS1 is inclined with respect to the longitudinal direction (x axis) by a third angle of inclination TA3 = TA1 = 16° (the positive value of the third angle of inclination TA3 again being representative of the airflow direction FS1 having a flow component down towards the track 105). It will be appreciated however that, with other embodiments of the invention, a certain deviation may exist between the first and third angle of inclination TA1, TA3.

It will be appreciated that, typically, the difference between the first and third angle of inclination TA1, TA3 and the second angle of inclination TA2 varies as a function of the flow length of the first ramp section 103.11 along which the second angle of inclination TA2 prevails. The longer this flow length is, the smaller is the deviation between these angles.

In the present example, the second ramp section 103.12 in a similar manner is a substantially smooth and smoothly curved surface with substantially no (noticeable macroscopic) surface irregularities. Hence, the surface of the second ramp section 103.12 itself coincides with or forms a second median surface (as defined above) of the second ramp section 103.12. The second median surface formed by surface of the second ramp section 103.12, in the central longitudinal plane 101.1, at its transition to the flow separation edge 103.9, defines a third tangential direction T4 pointing away from the free end of the head section, the third tangential direction T4, in a sector facing in the height direction, being inclined with respect to the first tangential direction T1 by an angle of inclination of 134°.

Furthermore, in the present example, the second ramp section 103.12, in the central longitudinal plane 101.1, at the flow separation edge 103.9, imposes a second flow direction FS2 onto a second airflow flowing, at the nominal operating speed, along the outer skin 103.4 in a direction parallel to the central longitudinal plane 101.1 away from the free end of the head section (as it is the case during operation at the leading end of the vehicle 101). In the present example, the second flow direction FS2 coincides with the third tangential direction T4. Hence, the second flow direction FS2, in a sector facing in the height direction, is inclined with respect to the first flow direction FS1 by the fourth angle of inclination TA4 = 140°.

In the present example, the flow separation device 103.7 is substantially symmetric with respect to the central longitudinal plane 101.1. The flow separation edge 103.9, in one single edge section, extends over the entire flow separation step 103.7 (i.e. from one lateral surface to the opposing lateral surface of the vehicle module 102) and is designed as a sharp, pronounced edge, thereby achieving in a simple manner the desired flow separation pattern with an aerodynamically advantageous shape of the wake bubble 109. However, it will be appreciated that the flow separation edge, with other embodiments of the invention, may also be provided in a plurality of spatially distinct edge sections.

Over its entire length (i.e. over the entire edge section), the flow separation edge 103.9 defines a tangential direction (in each point of the edge section). The flow separation edge 103.9, in a sectional plane perpendicular to this tangential direction, has a radius of curvature of 5 mm guaranteeing persistent flow separation in a simple and efficient manner.

It will be appreciated that, in the present example, a flow separation step is formed by the first ramp section 103.11 and the second ramp section 103.12 which, on the one hand, provokes (at the trailing end of the vehicle 101) a flow that has a first flow direction FS1 at the flow separation edge 103.9 and which, on the other hand, has the second ramp section 103.12 located (in this first flow direction FS1) downstream of the flow separation edge 103.9 and sharply folds away with respect to this first flow direction FS1 by 40° such that the transverse distance (i.e. the distance in a direction transverse to the first flow direction FS1) between the separated flow 106.1 and the second ramp section 103.12 quickly increases as the flow 106.1 propagates. It will be appreciated in this context that the second ramp section 103.12 does not necessarily have to be smoothly curved wall element. Rather, it may be a straight wall element as well as be arbitrarily curved (in one or two directions) or may be an (arbitrary) combination of curved and/or straight sections.

Hence, with the design as outlined above, in a very simple manner a configuration may be achieved, where the sharp, rapid and pronounced change in the course of the outer skin 103.4 as outlined above is generated at the flow separation edge 103.9, such that the upper airflow fraction 106.1 cannot follow this change in the course of the outer skin 103.4 anymore and detaches in a defined manner from the outer skin 103.4 at the flow separation edge 103.9.

In the present example, an aerodynamically particularly beneficial configuration is achieved in that the flow separation edge 103.9, from one lateral surface to the other lateral surface of the wagon body 102, substantially seamlessly continues crosswind flow separation edges 110.1 of two crosswind flow separation devices 110 laterally extending in the longitudinal direction along the upper side of the head section 103.2 alongside the front window 101.2 as they are known from EP 2 383 161 A1 (the entire disclosure of which is Incorporated herein by reference). Hence, in the present example, flow separation edges 110.1 and 103.9 together form a generally U-shaped flow separation edge substantially framing the upward facing part of the outer skin 103.4 of the head section 103.2.

The flow separation edge 103.9, in a perpendicular projection onto a transverse plane perpendicular to the longitudinal direction, has a maximum effective edge width Wsₘₐₓ in the transverse direction (y-axis) which is defined by the points where a tangent to the flow separation edge 103.9 in a plane perpendicular to the height direction reaches inclination of 45° with respect to the transverse direction as it is shown in Figure 3. In the present example, the maximum effective edge width is Wsₘₐₓ = 1825 mm the transverse direction, which corresponds to 64% of the maximum wagon body width Wₘₐₓ. of the wagon body 102 at the transition plane 102.3. Hence, a size of the flow separation cavity 103.6 is obtained, which generates an impact on the airflow 106.1 that is sufficiently large to catapult it away from the outer skin 103.4.

It will be appreciated that, in some cases, it may be provided that the flow separation device 103.7, despite being a passive component as outlined above, is deactivated when located at the leading end of the vehicle 101 by simply covering the flow separation cavity 103.6 with a suitable cover as it is indicated by the dashed contour 111 in Figure 4. In this case, the flow separation device 103.7 preferably comprises an interface unit (not shown) configured to mount the cover device 111 in a deactivated state of the flow separation device 103.7. Preferably, as shown in Figure 4, such a cover 111 is shaped such that it substantially continues the smooth surface of the surrounding outer skin 103.4 of the wagon body 102, thereby potentially avoiding any rise in the aerodynamic drag at the leading end of the vehicle 101 due to the flow separation device 103.7.

### Second to fifth embodiment

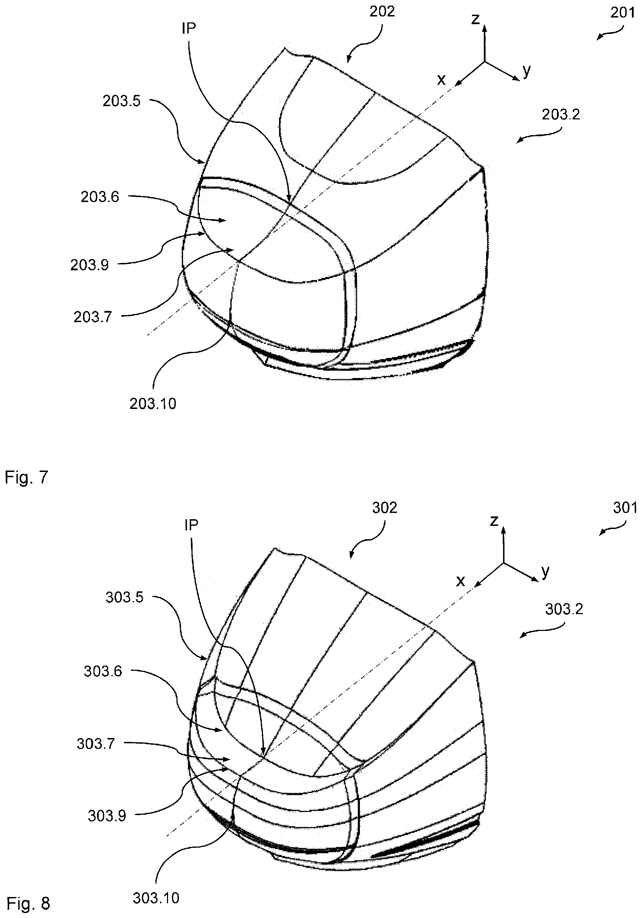

With reference to Figure 7 to 10 further preferred embodiments of a vehicle 201 to 501 according to the present invention will now be described in greater detail. The respective vehicle 201 to 501, in its basic design and functionality, largely corresponds to the vehicle 101 such that it will be mainly referred to the differences only. Moreover, identical or like components are given the same reference numerals increased by 100 to 400, respectively. Unless deviating explanations are given in the following it is here explicitly referred to the explanations given above with respect to the features and functions of these components.

Furthermore, with respect to the location and orientation of the dimensions and angles referred to in the following explicit reference is made to the corresponding dimensions and angles as described and shown in the drawings in the context of the first embodiment.

The only difference of the vehicle 201 with respect to the vehicle 101 lies in the specific design parameters of the flow separation device 203.7 of the nose section 203.5 of the vehicle module 202 which, apart from the nose section 203.5 shown in Figure 7, is identical to the vehicle module 102. In particular, the vehicle 201 has the same head length HL, head height HH, head width Wₘₐₓ, and forerun angle FA = 45° as the vehicle 101.

In the embodiment of Figure 7, the flow separation device 203.7, more precisely the flow separation edge 203.9, in a transversally central area of the wagon body, in particular, in the central longitudinal plane 101.1, has a flow separation height HS above the track level TOR of 1386 mm, which again corresponds to roughly 36% of the head height HH.

Furthermore, the flow separation edge 203.9, in the central longitudinal plane 101.1, has a nose distance ND in the longitudinal direction from the nose tip 203.10 of the head section 203.2, which is ND = 122 mm, and, hence, 2% of the head length HL.

The inflection point IP is located at an inflection point distance of IPD = 500 mm, such that the inflection point distance IPD is 8.4% of the head length HL.

The first tangential direction T1 is inclined with respect to the longitudinal direction by a first angle of inclination TA1 = +12°, while the second angle of inclination is TA2 = +4°. Again, the third angle of inclination TA3 is equal to the first angle of inclination TA1.

Finally, the maximum effective edge width is Wsₘₐₓ = 1520 mm in the transverse direction, which corresponds to 53% of the maximum wagon body width Wₘₐₓ. of the wagon body 202 at the transition plane 102.3.

Hence, here as well, a design and size of the flow separation cavity 203.6 is obtained, which generates an impact on the airflow 106.1 that is sufficiently large to catapult it away from the outer skin 103.4. Again, such a design leads to a slight increase in the aerodynamic drag when the flow separation device 203.7 is located at the leading end of the vehicle 201. However, here as well, this effect is largely outweighed by the reduction of the drag provided by the flow separation device 203.7 (identically designed in the embodiment shown) located at the other, trailing end of the train 201. Thus, in total, a considerable reduction of the overall drag of the train 201 may be achieved. In the present example, compared to the otherwise identically designed vehicle 107 shown in Figure 6, an overall reduction between 2% and 2.5% in the aerodynamic drag of the train 201 may be achieved.

The only difference of the vehicle 301 with respect to the vehicle 101 also lies in the specific design parameters of the flow separation device 303.7 of the nose section 303.5 of the vehicle module 302 which, apart from the nose section 303.5 shown in Figure 8, is identical to the vehicle module 102. In particular, the vehicle 301 again has the same head length HL, head height HH, head width Wₘₐₓ, and forerun angle FA = 45° as the vehicle 101.

In the embodiment of Figure 8, the flow separation device 303.7, more precisely the flow separation edge 303.9, in a transversally central area of the wagon body, in particular, in the central longitudinal plane 101.1, has a flow separation height HS above the track level TOR of 1334 mm, which again corresponds to roughly 35% of the head height HH.

Furthermore, the flow separation edge 303.9, in the central longitudinal plane 101.1, has a nose distance ND in the longitudinal direction from the nose tip 303.10 of the head section 303.2, which is ND = 90 mm, and, hence, 1.5% of the head length HL.

The inflection point IP is located at an inflection point distance of IPD = 275 mm, such that the inflection point distance IPD is 4.7% of the head length HL.

The first tangential direction T1 is inclined with respect to the longitudinal direction by a first angle of inclination TA1 = +6°, while the second angle of inclination is TA2 = +4°. Again, the third angle of inclination TA3 is equal to the first angle of inclination TA1.

Finally, the maximum effective edge width is Wsₘₐₓ = 1500 mm in the transverse direction, which corresponds to 53% of the maximum wagon body width Wₘₐₓ. of the wagon body 302 at the transition plane 102.3.

Hence, here as well, a design and size of the flow separation cavity 303.6 is obtained, which generates an impact on the airflow 106.1 that is sufficiently large to catapult it away from the outer skin 103.4. Again, such a design leads to a slight increase in the aerodynamic drag when the flow separation device 303.7 is located at the leading end of the vehicle 301. However, here as well, this effect is largely outweighed by the reduction of the drag provided by the flow separation device 303.7 (identically designed in the embodiment shown) located at the other, trailing end of the train 301. Thus, in total, a considerable reduction of the overall drag of the train 301 may be achieved. In the present example, compared to the otherwise identically designed vehicle 107 shown in Figure 6, an overall reduction between 2% and 2.5% in the aerodynamic drag of the train 301 may be achieved.

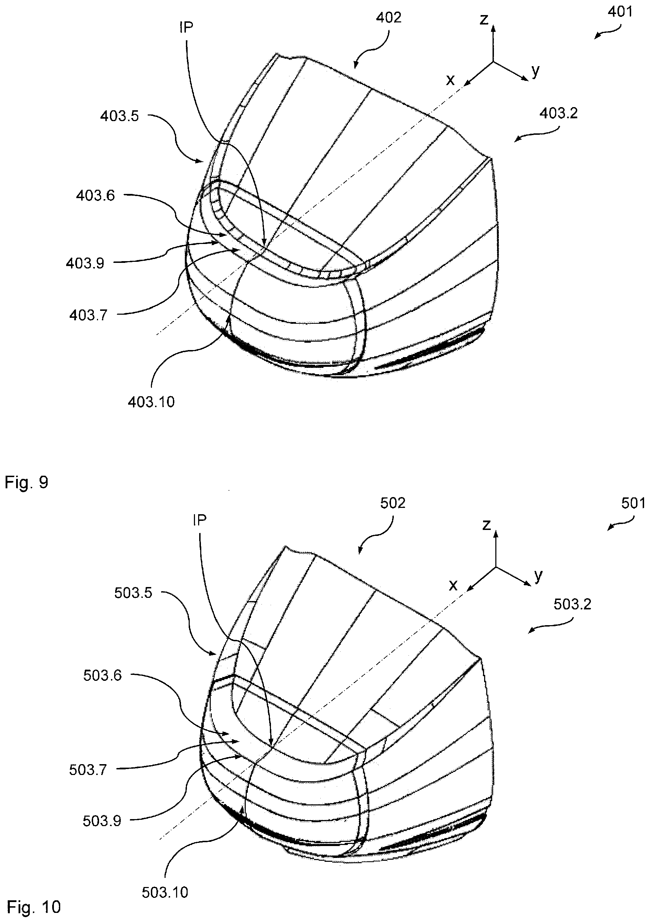

The only difference of the vehicle 401 with respect to the vehicle 101 also lies in the specific design parameters of the flow separation device 403.7 of the nose section 403.5 of the vehicle module 402 which, apart from the nose section 403.5 shown in Figure 9, is identical to the vehicle module 102. In particular, the vehicle 401 again has the same head length HL, head height HH, head width Wₘₐₓ, and forerun angle FA = 45° as the vehicle 101.

In the embodiment of Figure 9, the flow separation device 403.7, more precisely the flow separation edge 403.9, in a transversally central area of the wagon body, in particular, in the central longitudinal plane 101.1, has a flow separation height HS above the track level TOR of 1475 mm, which corresponds to roughly 38% of the head height HH.

Furthermore, the flow separation edge 403.9, in the central longitudinal plane 101.1, has a nose distance ND in the longitudinal direction from the nose tip 403.10 of the head section 403.2, which is ND = 209 mm, and, hence, 3.5% of the head length HL.

The inflection point IP is located at an inflection point distance of IPD = 150 mm, such that the inflection point distance IPD is 2.5% of the head length HL.

The first tangential direction T1 is inclined with respect to the longitudinal direction by a first angle of inclination TA1 = +1°, while the second angle of inclination here is also TA2 = +1°. Again, the third angle of inclination TA3 is equal to the first angle of inclination TA1.

Finally, the maximum effective edge width is Wsₘₐₓ = 1500 mm in the transverse direction, which corresponds to 53% of the maximum wagon body width Wₘₐₓ. of the wagon body 402 at the transition plane 102.3.

Hence, here as well, a design and size of the flow separation cavity 403.6 is obtained, which generates an impact on the airflow 106.1 that is sufficiently large to catapult it away from the outer skin 103.4. Again, such a design leads to a slight increase in the aerodynamic drag when the flow separation device 403.7 is located at the leading end of the vehicle 401. However, here as well, this effect is largely outweighed by the reduction of the drag provided by the flow separation device 403.7 (identically designed in the embodiment shown) located at the other, trailing end of the train 401. Thus, in total, a considerable reduction of the overall drag of the train 401 may be achieved. In the present example, compared to the otherwise identically designed vehicle 107 shown in Figure 6, an overall reduction between 2% and 2.5% in the aerodynamic drag of the train 401 may be achieved here as well.

The only difference of the vehicle 501 with respect to the vehicle 101 also lies in the specific design parameters of the flow separation device 503.7 of the nose section 503.5 of the vehicle module 502 which, apart from the nose section 503.5 shown in Figure 10, is identical to the vehicle module 102. In particular, the vehicle 501 again has the same head length HL, head height HH, head width Wₘₐₓ, and forerun angle FA = 45° as the vehicle 101.

In the embodiment of Figure 10, the flow separation device 503.7, more precisely the flow separation edge 503.9, in a transversally central area of the wagon body, in particular, in the central longitudinal plane 101.1, has a flow separation height HS above the track level TOR of 1386 mm, which corresponds to roughly 36% of the head height HH.

Furthermore, the flow separation edge 503.9, in the central longitudinal plane 101.1, has a nose distance ND in the longitudinal direction from the nose tip 503.10 of the head section 503.2, which is ND = 122 mm, and, hence, 2% of the head length HL.

The inflection point IP is located at an inflection point distance of IPD = 219 mm, such that the inflection point distance IPD is 3.7% of the head length HL.

The first tangential direction T1 is inclined with respect to the longitudinal direction by a first angle of inclination TA1 = +12°, while the second angle of inclination here is TA2 = +4°. Again, the third angle of inclination TA3 is equal to the first angle of inclination TA1.

Finally, the maximum effective edge width is Wsₘₐₓ = 1520 mm in the transverse direction, which corresponds to 53% of the maximum wagon body width Wₘₐₓ. of the wagon body 502 at the transition plane 102.3.

Hence, here as well, a design and size of the flow separation cavity 503.6 is obtained, which generates an impact on the airflow 106.1 that is sufficiently large to catapult it away from the outer skin 103.4. Again, such a design leads to a slight increase in the aerodynamic drag when the flow separation device 503.7 is located at the leading end of the vehicle 501. However, here as well, this effect is largely outweighed by the reduction of the drag provided by the flow separation device 503.7 (identically designed in the embodiment shown) located at the other, trailing end of the train 501. Thus, in total, a considerable reduction of the overall drag of the train 501 may be achieved. In the present example, compared to the otherwise identically designed vehicle 107 shown in Figure 6, an overall reduction between 2% and 2.5% in the aerodynamic drag of the train 501 may be achieved here as well.

It will be appreciated that any of the nose sections 203.5 to 503.5, in the foregoing embodiments, simply replace the nose section 103.5 of the vehicle 101 to form the respective vehicle 201 to 501.

### Sixth embodiment

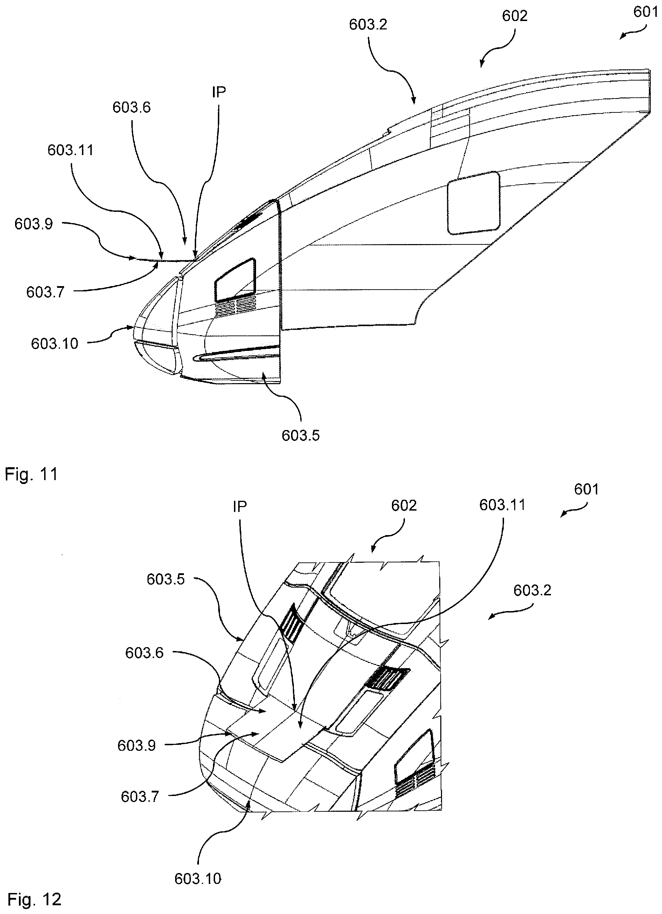

With reference to Figure 11 and 12 a further preferred embodiment of a vehicle 601 according to the present invention will now be described in greater detail. The vehicle 601, in its basic design and functionality, largely corresponds to the vehicle 101 such that it will be mainly referred to the differences only. Moreover, identical or like components are given the same reference numerals increased by 500. Unless deviating explanations are given in the following it is here explicitly referred to the explanations given above with respect to the features and functions of these components.

In particular, with respect to the location and orientation of the dimensions and angles referred to in the following explicit reference is made to the corresponding dimensions and angles as described and shown in the drawings in the context of the first embodiment.

The only difference of the vehicle 601 with respect to the vehicle 101 lies in the specific design of the flow separation device 603.7 of the nose section 603.5 of the vehicle module 602 which, apart from the nose section 603.5 shown in Figure 11 and 12, is identical to the vehicle module 102. In particular, the vehicle 601 has the same head length HL, head height HH, head width Wₘₐₓ, and forerun angle FA = 45° as the vehicle 101. It will be appreciated that the nose section 603.5 simply replaces the nose section 103.5 of the vehicle 101.

In the embodiment of Figures 11 and 12, the flow separation device 603.7 is a selectively activatable device in the form of a retractable, generally plate shaped element, which forms the flow separation edge 603.9 at its free end facing away from the outer skin 103.4. The flow separation device 603.7, in its deactivated state (not shown) is fully retracted behind the outer skin 103.4 in the longitudinal direction, such that the flow separation edge 603.9 is fully flush with the surrounding outer skin 103.4. In this case, when the head section 603.2 forms the leading end of the vehicle 601, the fully retracted and, hence, aerodynamically deactivated flow separation device 603.7 does not cause any drag.

As can be seen from Figure 11 and 12, in this embodiment, the inflection point IP is formed at the intersection between the plate shaped flow separation device 603.7 and the outer skin, such that here as well a generally concave flow separation flow separation section 603.6 is formed, which provides the necessary change in the direction of the airflow fraction 106.1 necessary to persistently detach from the outer skin 104.3 and provide the desired wake flow pattern as described in the context of the first embodiment (in particular in the context of Figure 5).

Similar as in the first embodiment, the flow separation device 603.7 forms a first ramp section 603.11 upstream of the flow separation edge 603.9 which provides the desired change in the direction of the airflow fraction 106.1. Due to the fact that the flow separation device 603.7 is a simple generally plate shaped element, the airflow fraction 106.1 after passing the flow separation edge 603.9 persistently detaches from the outer skin 104.3 as long as there is a sufficient distance between the free end of the plate 603.7 with the flow separation edge 603.9 and the adjacent part of the outer skin.

In the present example, the flow separation device 603.7, more precisely the flow separation edge 603.9, in a transversally central area of the wagon body, in particular, in the central longitudinal plane 101.1, has a flow separation height HS above the track level TOR of 1768 mm, which corresponds to roughly 46% of the head height HH.

Furthermore, the flow separation edge 603.9, in the central longitudinal plane 101.1, has a nose distance ND in the longitudinal direction from the nose tip 603.10 of the head section 603.2, which is ND = 47 mm, and, hence, 0.7% of the head length HL.

The inflection point IP is located at an inflection point distance of IPD = 630 mm, such that the inflection point distance IPD is 10.7% of the head length HL.

The first tangential direction T1 is inclined with respect to the longitudinal direction by a first angle of inclination TA1 = -5°, while the second angle of inclination is TA2 = -6°. Again, the third angle of inclination TA3 is equal to the first angle of inclination TA1.

Finally, the maximum effective edge width obviously corresponds to the width of the plate 603.7 in the transverse direction and is Wsₘₐₓ = 800 mm, which corresponds to 28% of the maximum wagon body width Wₘₐₓ. of the wagon body 602 at the transition plane 102.3.

Hence, here as well, a design and size of the flow separation cavity 603.6 is obtained, which generates an impact on the airflow 106.1 that is sufficiently large to catapult it away from the outer skin 103.4. Moreover, since the flow separation device 603.7 may be fully retracted, i.e. deactivated, such a design avoids any increase in the aerodynamic drag when the flow separation device 603.7 is located at the leading end of the vehicle 601. Thus, in total, a considerable reduction of the overall drag of the train 601 may be achieved. In the present example, compared to the otherwise identically designed vehicle 107 shown in Figure 6, an overall reduction between 2% and 2.5% in the aerodynamic drag of the train 601 may be achieved.

It will be appreciated that the flow separation device 606.7 may be used are set to different extensions from the outer skin 103.4 and/or to different angles of inclination with respect to the outer skin 103.4. In the following corresponding examples will be given.

In a first variation, the flow separation height is set to HS = 1631 mm (i.e. 42% of the head height HH). The nose distance is set to ND = 70 mm (i.e. 1.1% of the head length HL). The inflection point distance is set to IPD = 610 mm (i.e. 10.7% of the head length HL. The first angle of inclination is set to TA1 = +10°, while the second angle of inclination is also TA2 = +10°. Again, the third angle of inclination TA3 is equal to the first angle of inclination TA1. Finally, the maximum effective edge width obviously is again Wsₘₐₓ = 800 mm (i.e. 28% of the maximum wagon body width Wₘₐₓ). In this variant, compared to the otherwise identically designed vehicle 107 shown in Figure 6, an overall reduction between 2% and 2.5% in the aerodynamic drag of the train 601 may also be achieved.

In a second variation, the flow separation height is set to HS = 1835 mm (i.e. 47% of the head height HH). The nose distance is set to ND = 185 mm (i.e. 3.1% of the head length HL). The inflection point distance is set to IPD = 505 mm (i.e. 8.6% of the head length HL. The first angle of inclination is set to TA1 = -20°, while the second angle of inclination is also TA2 = -24°. Again, the third angle of inclination TA3 is equal to the first angle of inclination TA1. Finally, the maximum effective edge width obviously is again Wsₘₐₓ = 800 mm (i.e. 28% of the maximum wagon body width Wₘₐₓ). In this variant, compared to the otherwise identically designed vehicle 107 shown in Figure 6, an overall reduction between 1.5% and 2.0% in the aerodynamic drag of the train 601 may be achieved.

In a third variation, the flow separation height is set to HS = 1785 mm (i.e. 46% of the head height HH). The nose distance is set to ND = 370 mm (i.e. 6.3% of the head length HL). The inflection point distance is set to IPD = 324 mm (i.e. 5.5% of the head length HL. The first angle of inclination is set to TA1 = -15°, while the second angle of inclination is also TA2 = -23°. Again, the third angle of inclination TA3 is equal to the first angle of inclination TA1. Finally, the maximum effective edge width obviously is again Wsₘₐₓ = 800 mm (i.e. 28% of the maximum wagon body width Wₘₐₓ). In this variant, compared to the otherwise identically designed vehicle 107 shown in Figure 6, an overall reduction between 1.5% and 2.0% in the aerodynamic drag of the train 601 may be achieved here as well.

Finally, in a fourth variation, the flow separation height is set to HS = 1760 mm (i.e. 45% of the head height HH). The nose distance is set to ND = 368 mm (i.e. 6.3% of the head length HL). The inflection point distance is set to IPD = 310 mm (i.e. 5.3% of the head length HL. The first angle of inclination is set to TA1 = -5°, while the second angle of inclination is also TA2 = -7°. Again, the third angle of inclination TA3 is equal to the first angle of inclination TA1. Finally, the maximum effective edge width obviously is again Wsₘₐₓ = 800 mm (i.e. 28% of the maximum wagon body width Wₘₐₓ). In this variant, compared to the otherwise identically designed vehicle 107 shown in Figure 6, an overall reduction between 1.5% and 2.0% in the aerodynamic drag of the train 601 may be achieved here as well.

### Seventh embodiment

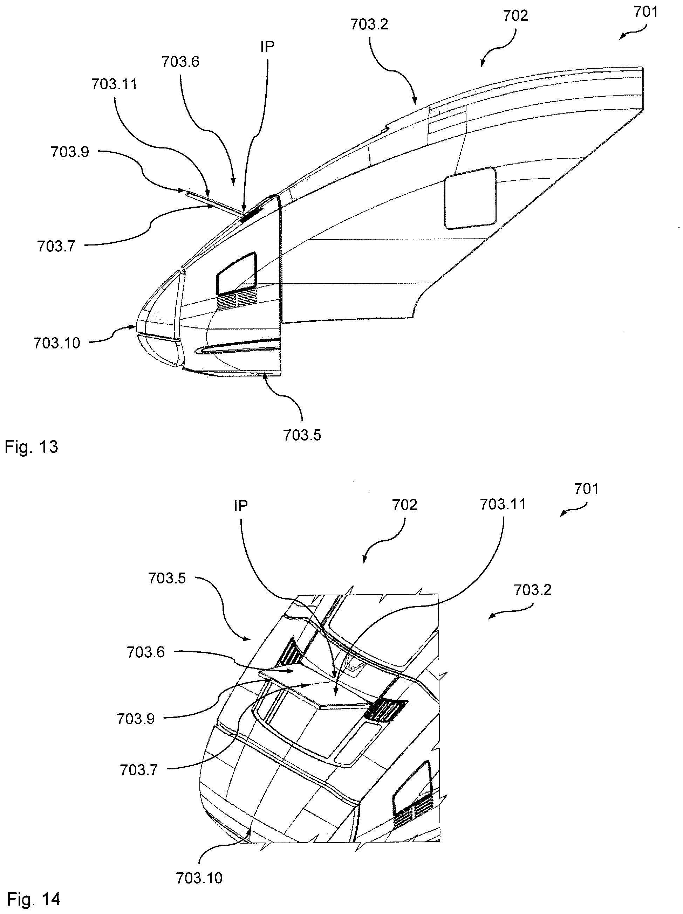

With reference to Figure 13 and 14 a further preferred embodiment of a vehicle 701 according to the present invention will now be described in greater detail. The vehicle 701, in its basic design and functionality, largely corresponds to the vehicle 101 such that it will be mainly referred to the differences only. Moreover, identical or like components are given the same reference numerals increased by 600. Unless deviating explanations are given in the following it is here explicitly referred to the explanations given above with respect to the features and functions of these components.

In particular, with respect to the location and orientation of the dimensions and angles referred to in the following explicit reference is made to the corresponding dimensions and angles as described and shown in the drawings in the context of the first embodiment.

The only difference of the vehicle 701 with respect to the vehicle 101 lies in the specific design of the flow separation device 703.7 of the nose section 703.5 of the vehicle module 702 which, apart from the nose section 703.5 shown in Figure 13 and 14, is identical to the vehicle module 102. In particular, the vehicle 701 has the same head length HL, head height HH, head width Wₘₐₓ, and forerun angle FA = 45° as the vehicle 101. It will be appreciated that the nose section 703.5 simply replaces the nose section 103.5 of the vehicle 101.

In the embodiment of Figures 10 and 11, the flow separation device 703.7 is a selectively activatable device in the form of a pivotable, generally plate shaped element, which forms the flow separation edge 703.9 at its free end facing away from the outer skin 103.4. The flow separation device 703.7, in its deactivated state (not shown) is pivoted about a pivot axis extending in the transverse direction, such that the upper surface of the flow separation device 703.7 is fully flush with the surrounding outer skin 103.4. In this case, when the head section 703.2 forms the leading end of the vehicle 701, the fully retracted and, hence, aerodynamically deactivated flow separation device 703.7 does not cause any drag.

As can be seen from Figure 11 and 12, in this embodiment, the inflection point IP is formed at the intersection between the plate shaped flow separation device 703.7 and the outer skin, such that here as well a generally concave flow separation flow separation section 703.6 is formed, which provides the necessary change in the direction of the airflow fraction 106.1 necessary to persistently detach from the outer skin 104.3 and provide the desired wake flow pattern as described in the context of the first embodiment (in particular in the context of Figure 5).

Similar as in the first embodiment, the flow separation device 703.7 forms a first ramp section 703.11 upstream of the flow separation edge 703.9 which provides the desired change in the direction of the airflow fraction 106.1. Due to the fact that the flow separation device 703.7 is a simple generally plate shaped element, the airflow fraction 106.1 after passing the flow separation edge 703.9 persistently detaches from the outer skin 104.3 as long as there is a sufficient distance between the free end of the plate 703.7 with the flow separation edge 703.9 and the adjacent part of the outer skin.

In the present example, the flow separation device 703.7, more precisely the inflection point IP, in a transversally central area of the wagon body, in particular, in the central longitudinal plane 101.1, has a height above the track level TOR of 2235 mm which corresponds to roughly 57% of the head height HH. The flow separation edge 703.9 has a height above the track level TOR of 2475 mm, which corresponds to roughly 63% of the head height HH. Nevertheless, the decisive point of the onset of the flow separation device 703.7 formed by the inflection point IP still is below 60% of the head height HH.

Furthermore, the flow separation edge 703.9, in the central longitudinal plane 101.1, has a nose distance ND in the longitudinal direction from the nose tip 703.10 of the head section 703.2, which is ND = 596 mm, and, hence, 10.1% of the head length HL.

The inflection point IP is located at an inflection point distance of IPD = 700 mm, such that the inflection point distance IPD is 11.9% of the head length HL.

The first tangential direction T1 is inclined with respect to the longitudinal direction by a first angle of inclination TA1 = -20°, while the second angle of inclination is also TA2 = -20°. Again, the third angle of inclination TA3 is equal to the first angle of inclination TA1.

Finally, the maximum effective edge width obviously corresponds to the width of the plate 703.7 in the transverse direction and is Wsₘₐₓ = 852 mm, which corresponds to 30% of the maximum wagon body width Wₘₐₓ. of the wagon body 702 at the transition plane 102.3.

Hence, here as well, a design and size of the flow separation cavity 703.6 is obtained, which generates an impact on the airflow 106.1 that is sufficiently large to catapult it away from the outer skin 103.4. Moreover, since the flow separation device 703.7 may be fully retracted, i.e. deactivated, such a design avoids any increase in the aerodynamic drag when the flow separation device 703.7 is located at the leading end of the vehicle 701. Thus, in total, a considerable reduction of the overall drag of the train 701 may be achieved. In the present example, compared to the otherwise identically designed vehicle 107 shown in Figure 6, an overall reduction between 1.5% and 2.0% in the aerodynamic drag of the train 701 may be achieved.

Although the present invention in the foregoing has only been described in the context of single-deck rail vehicles, it will be appreciated that it may also be applied to any other type of vehicle, in particular double-deck rail vehicles in order to overcome similar problems with respect to the drag and slipstream behavior of the vehicle.

## Claims

1. A vehicle, in particular a rail vehicle, for a bidirectional operation at a nominal travelling speed, in particular above 160 km/h to 200 km/h, in a respective direction of travel, comprising
- at least one vehicle module (102; 202; 302; 402) with a wagon body (103; 203; 303; 403) being supported on a running gear (104) configured to run on a track (105) defining a track level;
- said vehicle module (102; 202; 302; 402) defining a longitudinal direction, a transverse direction and a height direction;
- said wagon body (103; 203; 303; 403) having an outer skin (103.4; 203.4; 303.4; 403.4) defining a generally prismatic body section and a non-prismatic laterally tapering head section (103.2; 203.2; 303.2; 403.2) located at one of its ends;
- said vehicle module (102; 202; 302; 402), at a transition between said body section, and said head section, having a maximum vehicle height dimension above said track level in said height direction;
- said wagon body (103; 203; 303; 403), in an upward facing part of said head section, having a flow separation section (103.6; 203.6; 303.6; 403.6) comprising a flow separation device (103.7; 203.7; 303.7; 403.7), in particular a flow separation edge (103.9; 203.9; 303.9; 403.9);
- said flow separation device (103.7; 203.7; 303.7; 403.7), in particular, said flow separation edge, in a transversally central area of said wagon body (103; 203; 303; 403) and at least in an activated state, being located at a flow separation height in said vehicle height direction;
- said flow separation device (103.7; 203.7; 303.7; 403.7) providing a persistent separation of an upper fraction of an airflow (106) from said outer skin (103.4; 203.4; 303.4; 403.4) of said wagon body (103; 203; 303; 403) when said vehicle module (102; 202; 302; 402) runs at said travelling speed with said head section (103.2; 203.2; 303.2; 403.2) forming a trailing end of said vehicle module (102; 202; 302; 402);
**characterized in that**
- said flow separation device (103.7; 203.7; 303.7; 403.7), at least in said activated state, defining a generally concave flow separation section of said outer skin,
- said flow separation height ranging up to 50% to 65% of said maximum vehicle height dimension, preferably from 25% to 50% of said maximum vehicle height dimension, more preferably from 30% to 46% of said maximum vehicle height dimension, even more preferably from 33% to 39% of said maximum vehicle height dimension.

2. The vehicle according to claim 1, wherein
- said flow separation height ranges up to 2500 mm, preferably from 900 mm to 1850 mm, more preferably from 1150 mm to 1650 mm, even more preferably from 1275 mm to 1750 mm, said flow separation device, in particular, being a permanently effective passive device, and said flow separation height ranging from 1100 mm to 1700 mm, preferably from 1200 mm to 1500 mm, more preferably from 1300 mm to 1400 mm, or said flow separation device, in particular, being a selectively activatable device, in particular a generally plate shaped device, and said flow separation height ranging from 900 mm to 2500 mm, preferably from 1300 mm to 1900 mm, more preferably from 1600 mm to 1750 mm;
and/or
- said flow separation device, in particular, said flow separation edge, in a central longitudinal plane perpendicular to said transverse direction, has a nose distance in said longitudinal direction from a free end of said head section, and said head section having a maximum length in said longitudinal direction;
- said nose distance ranging from 0 mm to 600 mm, preferably from 30 mm to 350 mm, more preferably from 50 mm to 200 mm, said flow separation device, in particular, being a permanently effective passive device, and said nose distance ranging from 0 mm to 400 mm, preferably from 90 mm to 200 mm, more preferably from 90 mm to 150 mm, or said flow separation device, in particular, being a selectively activatable device, in particular a generally plate shaped device, and said nose distance ranging from 0 mm to 600 mm, preferably from 20 mm to 350 mm, more preferably from 40 mm to 200 mm;
and/or
- said nose distance ranging from 0% to 11%, preferably from 0% to 6%, more preferably from 1.0% to 3.5%, of said maximum length, said flow separation device, in particular, being a permanently effective passive device and said nose distance ranging from 0% to 7%, preferably from 1% to 4.5%, more preferably from 1.5% to 3.5%, of said maximum length, or said flow separation device, in particular, being a selectively activatable device, in particular a generally plate shaped device, and said nose distance ranging from 0% to 12%, preferably from 0% to 6%, more preferably from 0.5% to 3.5% of said maximum length.

3. The vehicle according to claim 1 or 2, wherein
- a forerun part of said outer skin located on a side of said flow separation device facing away from a free end of said head section, in a central longitudinal plane perpendicular to said transverse direction, imposes a forerun flow direction onto said airflow, which is inclined with respect to said longitudinal direction by 20° to 60°, preferably by 30° to 50°, more preferably by 35° to 45°; and
- said flow separation device (103.7; 203.7; 303.7; 403.7), at least in said activated state, comprises a first ramp section located adjacent to said flow separation edge (103.9; 203.9; 303.9; 403.9) on a side of said flow separation edge facing away from a free end of said head section;
wherein
- said first ramp section, in a central longitudinal plane perpendicular to said transverse direction, has a tangent starting point at said outer skin located at a distance of 150 mm from said flow separation edge and defines a first tangential direction starting at said tangent starting point, being tangent to said flow separation edge and pointing towards a free end of said head section, said first tangential direction being inclined with respect to said longitudinal direction by a first angle of inclination, said first angle of inclination ranging from -25° to +25°, preferably from -15° to +20°, more preferably from 0° to +15°, a positive value of said first angle of inclination being representative of said first tangential direction having a component towards said track;
and/or wherein
- said outer skin defines a first median surface of said first ramp section and said first median surface, in a central longitudinal plane perpendicular to said transverse direction, at its transition to said flow separation edge, defining a second tangential direction pointing towards a free end of said head section, said second tangential direction being inclined with respect to said longitudinal direction by a second angle of inclination, said second angle of inclination ranging from -25° to +25°, preferably from -10° to +15°, more preferably from -5° to +10°, a positive value of said second angle of inclination being representative of said second tangential direction having a component towards said track;
and/or wherein
- said first ramp section, in a central longitudinal plane perpendicular to said transverse direction, is configured to impose, at said flow separation edge, a first flow direction onto a first airflow flowing, at said nominal operating speed, along said outer skin in a direction parallel to said central longitudinal plane towards said free end, said first flow direction being inclined with respect to said longitudinal direction by a third angle of inclination, said third angle of inclination ranging from - 25° to +25°, preferably from -15° to +20°, more preferably from 0° to +15°, a positive value of said third angle of inclination being representative of said first airflow having a flow component towards said track;

4. The vehicle according to claim 3, wherein
- said flow separation device is a permanently effective passive device, said first angle of inclination and/or said third angle of inclination ranging from -5° to +25°, preferably from 0° to +20°, more preferably from +1° to +15°, and/or said second angle of inclination ranging from -5° to +15°, preferably from 0° to +10°, more preferably from +1° to +5°;
or
- said flow separation device is a selectively activatable device, in particular a generally plate shaped device, said first angle of inclination and/or said second angle of inclination and/or said third angle of inclination ranging from -30° to +20°, preferably from -20° to +15°, more preferably from -10° to +10°.

5. The vehicle according to claim 3 or 4, wherein
- said flow separation device (103.7; 203.7; 303.7; 403.7) comprises a second ramp section located adjacent to said flow separation edge on a side of said flow separation edge facing towards said free end of said head section;
wherein
- said outer skin defines a second median surface of said second ramp section and said second median surface, in said central longitudinal plane, at its transition to said flow separation edge, defining a third tangential direction pointing away from said free end of said head section, said third tangential direction, in a sector facing in said height direction, being inclined with respect to said first tangential direction by 60° to 160°, preferably by 90° to 150°, more preferably by 110° to 140°;
and/or wherein
- said second ramp section, in said central longitudinal plane, is configured to impose, at said flow separation edge, a second flow direction onto a second airflow flowing, at said nominal operating speed, along said outer skin in a direction parallel to said central longitudinal plane from said free end of said head section, said second flow direction, in a sector facing in said height direction, being inclined with respect to said first flow direction by 60° to 160°, preferably by 90° to 150°, more preferably by 110° to 140°.

6. The vehicle according to any one of the preceding claims, wherein
- said flow separation section, in a central longitudinal plane perpendicular to said transverse direction, has an inflection point at which, in particular, a curvature of said outer skin changes its sign and/or at which a kink is formed in said outer skin;
- said inflection point, in said central longitudinal plane, having an inflection point distance from said flow separation edge, and
- said head section having a maximum head length in said longitudinal direction; wherein
- said inflection point distance ranges from 50 mm to 900 mm, preferably from 150 mm to 800 mm, more preferably from 150 mm to 500 mm;
- said flow separation device, in particular, being a permanently effective passive device, and said inflection point distance ranging from 50 mm to 700 mm, preferably from 120 mm to 600 mm, more preferably from 150 mm to 500 mm; or said flow separation device, in particular, being a selectively activatable device, in particular a generally plate shaped device, and said inflection point distance ranging from 50 mm to 900 mm, preferably from 250 mm to 800 mm, more preferably from 300 mm to 600 mm;
and/or wherein
- said inflection point distance ranges from 0.7% to 15%, preferably from 2.5% to 13.5%, more preferably from 2.5% to 8.5%, of said maximum head length;
- said flow separation device, in particular, being a permanently effective passive device and said inflection point distance ranging from 0.7% to 12%, preferably from 2% to 10%, more preferably from 2.5% to 8.5%, of said maximum head length, or said flow separation device, in particular, being a selectively activatable device, in particular a generally plate shaped device, and said inflection point distance ranging from 0.5% to 15%, preferably from 4% to 13.5%, more preferably from 5% to 10% of said maximum head length.

7. The vehicle according to any one of the preceding claims, wherein
- said flow separation device (103.7; 203.7; 303.7; 403.7) comprises a sharp flow separation edge (103.9; 203.9; 303.9; 403.9);
- said flow separation edge (103.9; 203.9; 303.9; 403.9) having at least one edge section defining a tangential direction in each point of said edge section;
- said flow separation edge (103.9; 203.9; 303.9; 403.9), in said edge section and in a sectional plane perpendicular to said tangential direction, having a radius of curvature of less than 15 mm, preferably of less than 10 mm, more preferably of less than 5 mm;
- said edge section, in particular, extending over at least 60% of said flow separation edge (103.9; 203.9; 303.9; 403.9), preferably over at least 80% of said flow separation edge (103.9; 203.9; 303.9; 403.9), more preferably over substantially 100% of said flow separation edge (103.9; 203.9; 303.9; 403.9).

8. The vehicle according to any one of the preceding claims, wherein
- said flow separation edge (103.7; 203.7; 303.7; 403.7) extends, in particular substantially continuously extends, from one lateral surface to an opposing lateral surface of said wagon body (103; 203; 303; 403),
- said flow separation edge, in particular, continues, in particular substantially seamlessly continues, at least one crosswind flow separation edge extending in said longitudinal direction along at least one of said lateral surfaces of said wagon body;
- said at least one crosswind flow separation edge extending, in said longitudinal direction, along a front window of said vehicle, in particular, up to a roof section of said wagon body.
- said flow separation device (103.7; 203.7; 303.7; 403.7), in particular, being substantially symmetric with respect to a central longitudinal plane perpendicular to said transverse direction.

9. The vehicle according to any one of the preceding claims, wherein
- a perpendicular projection of said flow separation edge (103.9; 203.9; 303.9; 403.9) onto a transverse plane perpendicular to said longitudinal direction, has a maximum edge width Wsₘₐₓ in said transverse direction ranging from 500 mm to 2500 mm, preferably from 700 mm to 1900 mm, more preferably from 800 mm to 1850 mm; said flow separation device, in particular, being a permanently effective passive device, and said maximum edge width Wsₘₐₓ ranging from 500 mm to 2500 mm, preferably from 1200 mm to 1900 mm, more preferably from 1300 mm to 1850 mm; or said flow separation device, in particular, being a selectively activatable device, in particular a generally plate shaped device, and said maximum edge width Wsₘₐₓ ranging from 500 mm to 1100 mm, preferably from 700 mm to 1000 mm, more preferably from 750 mm to 900 mm;
and/or
a perpendicular projection of said flow separation edge (103.9; 203.9; 303.9; 403.9) onto a transverse plane perpendicular to said longitudinal direction has a maximum edge width Wsₘₐₓ in said transverse direction and said outer skin (103.4; 203.4; 303.4; 403.4), in said transverse direction, has a maximum wagon body width Wₘₐₓ, said said maximum edge width Wsₘₐₓ ranging from 15% to 70%, preferably from 25% to 65% more preferably from 45% to 65% of said maximum wagon body width Wₘₐₓ, said flow separation device, in particular, being a permanently effective passive device and said maximum edge width Wsₘₐₓ ranging from 15% to 70%, preferably from 40% to 65%, more preferably from 45% to 60%, of said maximum wagon body width Wₘₐₓ, or said flow separation device, in particular, being a selectively activatable device, in particular a generally plate shaped device, and said maximum edge width Wsₘₐₓ ranging from 15% to 40%, preferably from 25% to 35%, more preferably from 27% to 32% of said maximum wagon body width Wₘₐₓ.

10. The vehicle according to any one of the preceding claims, wherein
- said flow separation edge (103.9; 203.9; 303.9; 403.9) at least in part is formed by a permanently aerodynamically active component of said flow separation device (103.7; 203.7; 303.7; 403.7);
and/or
- said flow separation edge at least in part is formed by a substantially rigid part of said outer skin;
and/or
- said flow separation device at least in part is formed by a depression in said outer skin, said depression, in particular, being substantially sickle-shaped.
and/or
- said flow separation device comprises an interface unit configured to mount a cover device configured to cover said flow separation device in a deactivated state.

11. The vehicle according to any one of the preceding claims, wherein
- said flow separation device is selectively activatable component being aerodynamically effective in its activated state;
- said flow separation device, in particular, comprising a pivotable flap unit, said pivotable flap unit having an activated state and a deactivated state, said pivotable flap unit, in said deactivated state, forming a part of said outer skin substantially flush with adjacent parts of said outer skin, and said pivotable flap unit, in said activated state, protruding from said outer skin to form, at a free end, a flow separation edge of said flow separation device;
and/or
- said flow separation device, in particular, comprising a retractable unit, said retractable unit having an activated state and a deactivated state, said retractable unit, in said deactivated state, being retracted, in particular substantially entirely retracted, into said outer skin, in particular, retracted such that a substantially flush outer skin is formed in an area of said deactivated flow separation device, and said retractable unit, in said activated state, protruding from said outer skin to form, at a free end, a flow separation edge of said flow separation device, said retractable unit, in particular, comprising a substantially plate shaped flow separation element; said flow separation element, in particular, forming an at least section wise planar and/or at least section wise curved flow guiding surface;

12. The vehicle according to any one of the preceding claims, wherein
- said flow separation device (103.7; 203.7; 303.7; 403.7) is arranged such that said persistent separation of a first airflow (106.1) from said outer skin (103.4; 203.4; 303.4; 403.4) of said wagon body (103.8; 203.8; 303.8; 403.8) extends over a flow separation area of said outer skin (103.4; 203.4; 303.4; 403.4);
- said flow separation area being of sufficient size to generate a first rise in a static pressure distribution within said separated first airflow (106.1) and to at least reduce, in particular substantially avoid, the formation of two pronounced longitudinal wake vortices in a wake of said wagon body (103; 203; 303; 403);
- said first rise in said static pressure distribution within said separated airflow (106.1), in particular, being selected as a function of a static pressure distribution in an adjacent lateral second airflow (106.2) over a lateral part of said outer skin (103.4; 203.4; 303.4; 403.4) of said wagon body (103; 203; 303; 403) located adjacent to said flow separation device (103.7; 203.7; 303.7; 403.7);

13. The vehicle according to any one of the preceding claims, wherein
- said flow separation device (103.7; 203.7; 303.7; 403.7) is a first flow separation device located at a first end of said vehicle;
- a second flow separation device being located at an opposite second end of said vehicle,
- said vehicle, in particular, comprising a plurality of separate vehicle modules articulated to each other, said first flow separation device being located at a first vehicle module and said second flow separation device being located at an opposite second vehicle module;
- said second flow separation device, in particular, being substantially identical to said first flow separation device (103.7; 203.7; 303.7; 403.7).

14. The vehicle according to any one of the preceding claims, wherein
- said wagon body (103; 203; 303; 403) is a single-deck or a double-deck wagon body
and/or
- said vehicle comprises a plurality of separate vehicle modules articulated to each other
and/or
- said head section is a slender and elongated head section
and/or
- said head section, in said longitudinal direction, has a maximum head length, said maximum head length being at least 100%, preferably at least 125%, more preferably at least 150%, more preferably 125% to 175%, of said maximum vehicle height dimension
and/or
- said head section comprises a front window unit comprising a front window frame unit, said front window frame unit, in particular, comprising a wiper unit, said flow separation device being spaced apart from said front window unit, in particular, from said wiper unit, said flow separation device, in particular, in said height direction, being located below said front window unit, in particular, below said wiper unit, and/or being located between said front window unit, in particular, said wiper unit, and a free end of said wagon body.

15. A method of operating a vehicle according to any one of the preceding claims, comprising
- operating said vehicle in a first direction of travel, said flow separation device (103.7; 203.7; 303.7; 403.7) being activated and located at a trailing end of said vehicle,
and/or
- deactivating said flow separation device and operating said vehicle in a second direction of travel, wherein said flow separation device (103.7; 203.7; 303.7; 403.7) is located at a leading end of said vehicle.

## Patentansprüche

1. Fahrzeug, insbesondere Schienenfahrzeug, für einen bidirektionalen Betrieb bei einer Nennfahrgeschwindigkeit, insbesondere über 160 km/h bis 200 km/h, in einer jeweiligen Fahrtrichtung, umfassend
- wenigstens ein Fahrzeugmodul (102; 202 ; 302; 402) mit einem Wagenkasten (103; 203; 303; 403), der auf einem Fahrwerk (104) abgestützt ist ist, das dazu ausgebildet ist auf einem ein Gleisniveau definierenden Gleis (105) zu fahren, wobei
- das Fahrzeugmodul (102; 202; 302; 402) eine Längsrichtung, eine Querrichtung und eine Höhenrichtung definiert;
- der Wagenkasten (103; 203; 303; 403) eine Außenhaut (103.4; 203.4; 303.4; 403.4) aufweist, die einen generell prismatischen Körperabschnitt und einen nichtprismatischen, sich lateral verjüngenden Kopfabschnitt (103.2; 203.2; 303.2; 403.2) definiert, der sich an einem seiner Enden befindet;
- das Fahrzeugmodul (102; 202; 302; 402) an einem Übergang zwischen dem Körperabschnitt und dem Kopfabschnitt eine maximale Fahrzeughöhenabmessung über der Gleisebene in der Höhenrichtung aufweist;
- der Wagenkasten (103; 203; 303; 403), in einem nach oben weisenden Teil des Kopfabschnitts, einen Strömungsabrissabschnitt (103.6; 203.6; 303.6; 403.6) aufweist, der eine Strömungsabrissvorrichtung (103.7; 203.7; 303.7; 403.7), insbesondere eine Strömungsabrisskante (103.9; 203.9; 303.9; 403.9), aufweist;
- die Strömungsabrissvorrichtung (103.7; 203.7; 303.7; 403.7), insbesondere die Strömungsabrisskante, in einem in Querrichtung zentralen Bereich des Wagenkastens (103; 203; 303; 403) und wenigstens in einem aktivierten Zustand, in einer Strömungsabrisshöhe in Fahrzeughöhenrichtung angeordnet ist;
- die Strömungsabrissvorrichtung (103.7; 203.7; 303.7; 403.7) eine dauerhafte Ablösung eines oberen Anteils eines Luftstroms (106) von der Außenhaut (103.4; 203.4; 303.4; 403.4) des Wagenkastens (103; 203; 303; 403) bereitstellt, wenn das Fahrzeugmodul (102; 202; 302; 402) mit der Fahrgeschwindigkeit fährt, wobei der Kopfabschnitt (103.2; 203.2; 303.2; 403.2) ein hinteres Ende des Fahrzeugmoduls (102; 202; 302; 402) bildet;
**dadurch gekennzeichnet, dass**
- die Strömungsabrissvorrichtung (103.7; 203.7; 303.7; 403.7), wenigstens in dem aktivierten Zustand, einen im Wesentlichen konkaven Strömungsabrissabschnitt der Außenhaut definiert,
- die Strömungsabrisshöhe bis zu 50% bis 65% der maximalen Fahrzeughöhenabmessung, vorzugsweise von 25% bis 50% der maximalen Fahrzeughöhenabmessung, weiter vorzugsweise von 30% bis 46% der maximalen Fahrzeughöhenabmessung, weiter vorzugsweise von 33% bis 39% der maximalen Fahrzeughöhenabmessung, reicht.

2. Fahrzeug nach Anspruch 1, wobei
- die Strömungsabrisshöhe bis zu 2500 mm, vorzugsweise von 900 mm bis 1850 mm, weiter vorzugsweise von 1150 mm bis 1650 mm, weiter vorzugsweise von 1275 mm bis 1750 mm, reicht, wobei die Strömungsabrissvorrichtung insbesondere eine permanent wirksame passive Vorrichtung ist, und die Strömungsabrisshöhe von 1100 mm bis 1700 mm, vorzugsweise von 1200 mm bis 1500 mm, weiter vorzugsweise von 1300 mm bis 1400 mm reicht, oder die Strömungsabrissvorrichtung insbesondere eine selektiv aktivierbare Vorrichtung ist, insbesondere eine generell plattenförmige Vorrichtung ist, und die Strömungsabrisshöhe von 900 mm bis 2500 mm, vorzugsweise von 1300 mm bis 1900 mm, weiter vorzugsweise von 1600 mm bis 1750 mm reicht;
und/oder
- die Strömungsabrissvorrichtung, insbesondere die Strömungsabrisskante, in einer zentralen, zur Querrichtung senkrechten Längsebene einen Nasenabstand in Längsrichtung von einem freien Ende des Kopfabschnitts aufweist, und der Kopfabschnitt eine maximale Länge in der Längsrichtung aufweist;
- wobei der Nasenabstand von 0 mm bis 600 mm, vorzugsweise von 30 mm bis 350 mm, weiter vorzugsweise von 50 mm bis 200 mm, reicht, wobei die Strömungsabrissvorrichtung insbesondere eine permanent wirksame passive Vorrichtung ist, und der Nasenabstand von 0 mm bis 400 mm, vorzugsweise von 90 mm bis 200 mm, weiter vorzugsweise von 90 mm bis 150 mm, reicht, oder die Strömungsabrissvorrichtung insbesondere eine selektiv aktivierbare Vorrichtung ist, insbesondere eine generell plattenförmige Vorrichtung ist, und der Nasenabstand von 0 mm bis 600 mm, vorzugsweise von 20 mm bis 350 mm, weiter vorzugsweise von 40 mm bis 200 mm, reicht;
und/oder
- der Nasenabstand von 0% bis 11%, vorzugsweise von 0% bis 6%, weiter vorzugsweise von 1,0% bis 3,5%, der maximalen Länge reicht, wobei die Strömungsabrissvorrichtung insbesondere eine permanent wirksame passive Vorrichtung ist und der Nasenabstand von 0% bis 7%, vorzugsweise von 1% bis 4,5%, weiter vorzugsweise von 1,5% bis 3,5%, der maximalen Länge reicht, oder wobei die Strömungsabrissvorrichtung insbesondere eine selektiv aktivierbare Vorrichtung ist, insbesondere eine generell plattenförmige Vorrichtung ist, und der Nasenabstand von 0% bis 12%, vorzugsweise von 0% bis 6%, weiter vorzugsweise von 0,5% bis 3,5%, der maximalen Länge reicht.

3. Fahrzeug nach Anspruch 1 oder 2, wobei
- ein Vorlaufteil der Außenhaut, der auf einer Seite der Strömungsabrissvorrichtung angeordnet ist, die von einem freien Ende des Kopfabschnitts abgewandt ist, in einer zentralen, zur Querrichtung senkrechten Längsebene eine Vorlaufströmungsrichtung auf den Luftstrom aufbringt, die gegenüber der Längsrichtung um 20° bis 60°, vorzugsweise um 30° bis 50°, weiter vorzugsweise um 35° bis 45°, geneigt ist; und
- die Strömungsabrissvorrichtung (103.7; 203.7; 303.7; 403.7), wenigstens in dem aktivierten Zustand, einen ersten Rampenabschnitt aufweist, der benachbart zu der Strömungsabrisskante (103.9; 203.9; 303.9; 403.9) auf einer Seite der Strömungsabrisskante angeordnet ist, die von einem freien Ende des Kopfabschnitts abgewandt ist,
wobei
- der erste Rampenabschnitt, in einer zentralen, zur Querrichtung senkrechten Längsebene , einen Tangentenstartpunkt an der Außenhaut aufweist, der sich in einem Abstand von 150 mm von der Strömungsabrisskante befindet und eine erste Tangentenrichtung definiert, die an dem Tangentenstartpunkt beginnt, die tangential zu der Strömungsabrisskante verläuft und in Richtung eines freien Endes des Kopfabschnitts zeigt, wobei die erste Tangentenrichtung in Bezug auf die Längsrichtung um einen ersten Neigungswinkel geneigt ist, wobei der erste Neigungswinkel von -25° bis +25°, vorzugsweise von -15° bis +20°, weiter vorzugsweise von 0° bis +15°, reicht, wobei ein positiver Wert des ersten Neigungswinkels dafür repräsentativ ist, dass die erste tangentiale Richtung eine Komponente in Richtung des Gleises aufweist;
und/oder wobei
- die Außenhaut eine erste Medianfläche des ersten Rampenabschnitts definiert und die erste Medianfläche in einer zentralen, zur Querrichtung senkrechten Längsebene an ihrem Übergang zu der Strömungsabrisskante eine zweite Tangentenrichtung definiert, die in Richtung eines freien Endes des Kopfabschnitts zeigt, wobei die zweite Tangentenrichtung in Bezug auf die Längsrichtung um einen zweiten Neigungswinkel geneigt ist, wobei der zweite Neigungswinkel von -25° bis +25°, vorzugsweise von -10° bis +15°, weiter vorzugsweise von -5° bis +10°, reicht, wobei ein positiver Wert des zweiten Neigungswinkels dafür repräsentativ ist, dass die zweite tangentiale Richtung eine Komponente in Richtung des Gleises aufweist;
und/oder wobei
- der erste Rampenabschnitt in einer zentralen, zur Querrichtung senkrechten Längsebene dazu ausgebildet ist, an der Strömungsabrisskante einem ersten Luftstrom, der bei der Nennfahrgeschwindigkeit entlang der Außenhaut in einer Richtung parallel zu der zentralen Längsebene in Richtung des freien Endes strömt, eine erste Strömungsrichtung aufzuprägen, wobei die erste Strömungsrichtung in Bezug auf die Längsrichtung um einen dritten Neigungswinkel geneigt ist, wobei der dritte Neigungswinkel von -25° bis +25°, vorzugsweise von -15° bis +20°, weiter vorzugsweise von 0° bis +15°, reicht, wobei ein positiver Wert des dritten Neigungswinkels dafür repräsentativ, dass der erste Luftstrom eine Strömungskomponente in Richtung des Gleises aufweist.

4. Fahrzeug nach Anspruch 3, wobei
- die Strömungsabrissvorrichtung eine permanent wirksame passive Vorrichtung ist, wobei der erste Neigungswinkel und/oder der dritte Neigungswinkel von -5° bis +25°, vorzugsweise von 0° bis +20°, weiter vorzugsweise von +1° bis +15°, reicht, und/oder der zweite Neigungswinkel von -5° bis +15°, vorzugsweise von 0° bis +10°, weiter vorzugsweise von +1° bis +5°, reicht;
oder
- die Strömungsabrissvorrichtung eine selektiv aktivierbare Vorrichtung ist, insbesondere eine generell plattenförmige Vorrichtung ist, wobei der erste Neigungswinkel und/oder der zweite Neigungswinkel und/oder der dritte Neigungswinkel von -30° bis +20°, vorzugsweise von -20° bis +15°, weiter vorzugsweise von -10° bis + 10°, reicht.

5. Fahrzeug nach Anspruch 3 oder 4, wobei
- die Strömungsabrissvorrichtung (103.7; 203.7; 303.7; 403.7) einen zweiten Rampenabschnitt aufweist, der benachbart zu der Strömungsabrisskante auf einer Seite der Strömungsabrisskante angeordnet ist, die zu dem freien Ende des Kopfabschnitts weist;
wobei
- die Außenhaut eine zweite Medianfläche des zweiten Rampenabschnitts definiert und die zweite Medianfläche in der zentralen Längsebene, an ihrem Übergang zu der Strömungsabrisskante eine dritte Tangentenrichtung definiert, die von dem freien Ende des Kopfabschnitts wegzeigt, wobei die dritte Tangentenrichtung in einem Sektor, der in die Höhenrichtung weist, in Bezug auf die erste tangentiale Richtung um 60° bis 160°, vorzugsweise um 90° bis 150°, weiter vorzugsweise um 110° bis 140°, geneigt ist;
und/oder wobei
- der zweite Rampenabschnitt, in der zentralen Längsebene, dazu ausgebildet ist, an der Strömungsabrisskante einem zweiten Luftstrom, der bei der Nennbetriebsgeschwindigkeit entlang der Außenhaut parallel zu der zentralen Längsebene in einer Richtung von dem freien Ende des Kopfabschnitts her strömt, eine zweite Luftströmungsrichtung aufzuprägen, wobei die zweite Strömungsrichtung in einem in die Höhenrichtung weisenden Sektor gegenüber der ersten Strömungsrichtung um 60° bis 160°, vorzugsweise um 90° bis 150°, weiter vorzugsweise um 110° bis 140°, geneigt ist.

6. Fahrzeug nach einem der vorhergehenden Ansprüche, wobei
- der Strömungsabrissabschnitt in einer zentralen, zur Querrichtung senkrechten Längsebene einen Wendepunkt aufweist, an dem insbesondere eine Krümmung der Außenhaut ihr Vorzeichen ändert und/oder ein Knick in der Außenhaut gebildet ist;
- der Wendepunkt in der zentralen Längsebene einen Wendepunktabstand von der Strömungsabrisskante aufweist, und
- der Kopfabschnitt eine maximale Kopflänge in der Längsrichtung aufweist; wobei
- der Wendepunktabstand von 50 mm bis 900 mm, vorzugsweise von 150 mm bis 800 mm, weiter vorzugsweise von 150 mm bis 500 mm, reicht;
- die Strömungsabrissvorrichtung insbesondere eine permanent wirksame passive Vorrichtung ist, und der Wendepunktabstand von 50 mm bis 700 mm, vorzugsweise von 120 mm bis 600 mm, weiter vorzugsweise von 150 mm bis 500 mm, reicht; oder die Strömungsabrissvorrichtung insbesondere eine selektiv aktivierbare Vorrichtung ist, insbesondere eine generell plattenförmige Vorrichtung ist, und der Wendepunktabstand von 50 mm bis 900 mm, vorzugsweise von 250 mm bis 800 mm, weiter vorzugsweise von 300 mm bis 600 mm, reicht;
und/oder wobei
- der Wendepunktabstand im Bereich von 0,7% bis 15%, vorzugsweise von 2,5% bis 13,5%, weiter vorzugsweise von 2,5% bis 8,5% , der maximalen Kopflänge reicht;
- die Strömungsabrissvorrichtung insbesondere eine permanent wirksame passive Vorrichtung ist und der Wendepunktabstand von 0,7% bis 12%, vorzugsweise von 2% bis 10%, weiter vorzugsweise von 2,5% bis 8,5%, der maximalen Kopflänge reicht, oder die Strömungsabrissvorrichtung insbesondere eine selektiv aktivierbare Vorrichtung ist, insbesondere eine generell plattenförmige Vorrichtung ist, und der Wendepunktabstand von 0,5% bis 15%, vorzugsweise von 4% bis 13,5%, weiter vorzugsweise von 5% bis 10%, der maximalen Kopflänge reicht.

7. Fahrzeug nach einem der vorhergehenden Ansprüche, wobei
- die Strömungsabrissvorrichtung (103.7; 203.7; 303.7; 403.7) eine scharfe Strömungsabrisskante (103.9; 203.9; 303.9; 403.9) aufweist;
- die Strömungsabrisskante (103.9; 203.9; 303.9; 403.9) wenigstens einen Kantenabschnitt aufweist, der in jedem Punkt des Kantenabschnitts eine tangentiale Richtung definiert;
- die Strömungsabrisskante (103.9; 203.9; 303.9; 403.9), in dem Kantenabschnitt und in einer Schnittebene senkrecht zu der tangentialen Richtung, einen Krümmungsradius von weniger als 15 mm, vorzugsweise von weniger als 10 mm, weiter vorzugsweise von weniger als 5 mm, aufweist;
- sich der Kantenabschnitt, insbesondere über wenigstens 60% der Strömungsabrisskante (103.9; 203.9; 303.9; 403.9), vorzugsweise über wenigstens 80% der Strömungsabrisskante (103.9; 203.9; 303.9; 403.9), weiter vorzugsweise über im Wesentlichen 100% der Strömungsabrisskante (103,9; 203,9; 303,9; 403,9), erstreckt.

8. Fahrzeug nach einem der vorhergehenden Ansprüche, wobei
- sich die Strömungsabrisskante (103.7; 203.7; 303.7; 403.7), insbesondere kontinuierlich, von einer Seitenfläche zu einer gegenüberliegenden Seitenfläche des Wagenkastens (103; 203; 303; 403) erstreckt,
- die Strömungsabrisskante insbesondere wenigstens eine Seitenwindströmungsabrisskante, insbesondere im Wesentlichen nahtlos, fortsetzt, wobei sich die wenigstens eine Seitenwindströmungsabrisskante in Längsrichtung entlang wenigstens einer der Seitenflächen des Wagenkastens erstreckt;
- sich die wenigstens eine Seitenwindströmungsabrisskante in der Längsrichtung entlang einer Frontscheibe des Fahrzeugs, insbesondere bis zu einem Dachabschnitt des Wagenkastens, erstreckt;
- die Strömungsabrissvorrichtung (103.7; 203.7; 303.7; 403.7) insbesondere in Bezug auf eine zur Querrichtung senkrechte zentrale Längsebene im Wesentlichen symmetrisch ist.

9. Fahrzeug nach einem der vorhergehenden Ansprüche, wobei
- eine senkrechte Projektion der Strömungsabrisskante (103.9; 203.9; 303.9; 403.9) auf eine transversale Ebene, die senkrecht zu der Längsrichtung verläuft, eine maximale Kantenbreite Wsₘₐₓ in der Querrichtung aufweist, die von 500 mm bis 2500 mm, vorzugsweise von 700 mm bis 1900 mm, weiter vorzugsweise von 800 mm bis 1850 mm, reicht; wobei die Strömungsabrissvorrichtung insbesondere eine permanent wirksame passive Vorrichtung ist und die maximale Kantenbreite Wsₘₐₓ von 500 mm bis 2500 mm, vorzugsweise von 1200 mm bis 1900 mm, weiter vorzugsweise von 1300 mm bis 1850 mm, reicht; oder die Strömungsabrissvorrichtung insbesondere eine selektiv aktivierbare Vorrichtung ist, insbesondere eine generell plattenförmige Vorrichtung ist, und die maximale Kantenbreite Wsₘₐₓ von 500 mm bis 1100 mm, vorzugsweise von 700 mm bis 1000 mm, weiter vorzugsweise von 750 mm bis 900 mm, reicht;
und/oder
- eine senkrechte Projektion der Strömungsabrisskante (103.9; 203.9; 303.9; 403.9) auf eine transversale Ebene, die senkrecht zu der Längsrichtung verläuft, eine maximale Kantenbreite Wsₘₐₓ in der Querrichtung aufweist und die Außenhaut (103.4; 203.4; 303.4; 403.4) in der Querrichtung eine maximale Wagenkastenbreite Wₘₐₓ aufweist, wobei die maximale Kantenbreite Wsₘₐₓ von 15% bis 70%, vorzugsweise von 25% bis 65%, weiter vorzugsweise von 45% bis 65%, der maximalen Wagenkastenbreite Wₘₐₓ reicht, wobei die Strömungsabrissvorrichtung insbesondere eine permanent wirksame passive Vorrichtung ist und die maximale Kantenbreite Wsₘₐₓ von 15% bis 70%, vorzugsweise von 40% bis 65%, weiter vorzugsweise von 45% bis 60%, der maximalen Wagenkastenbreite Wₘₐₓ reicht, oder die Strömungsabrissvorrichtung, insbesondere eine selektiv aktivierbare Vorrichtung ist, insbesondere eine generell plattenförmige Vorrichtung ist, und die maximale Kantenbreite Wsₘₐₓ von 15% bis 40%, vorzugsweise von 25% bis 35%, weiter vorzugsweise von 27% bis 32%, der maximalen Wagenkastenbreite Wₘₐₓ reicht.

10. Fahrzeug nach einem der vorhergehenden Ansprüche, wobei
- die Strömungsabrisskante (103.9; 203.9; 303.9; 403.9) wenigstens zum Teil durch eine permanent aerodynamisch aktive Komponente der Strömungsabrissvorrichtung (103.7; 203.7; 303.7; 403,7) gebildet ist;
und/oder
- die Strömungsabrisskante wenigstens teilweise von einem im Wesentlichen starren Teil der Außenhaut gebildet wird;
und/oder
- die Strömungsabrissvorrichtung wenigstens teilweise durch eine Vertiefung in der Außenhaut gebildet wird, wobei die Vertiefung insbesondere im Wesentlichen sichelförmig ist;
und/oder
- die Strömungsabrissvorrichtung eine Schnittstelleneinheit umfasst, die dazu ausgebildet ist eine Abdeckvorrichtung zu montieren, die dazu ausgebildet ist, um die Strömungsabrissvorrichtung in einem deaktivierten Zustand abzudecken.

11. Fahrzeug nach einem der vorhergehenden Ansprüche, wobei
- die Strömungsabrissvorrichtung eine selektiv aktivierbare Komponente ist, die in ihrem aktivierten Zustand aerodynamisch wirksam ist;
- die Strömungsabrissvorrichtung insbesondere eine schwenkbare Klappeneinheit umfasst, wobei die schwenkbare Klappeneinheit einen aktivierten Zustand und einen deaktivierten Zustand aufweist, wobei die schwenkbare Klappeneinheit in dem deaktivierten Zustand einen Teil der Außenhaut bildet, der mit benachbarten Teilen im Wesentlichen bündig ist, und die schwenkbare Klappeneinheit in dem aktivierten Zustand, von der Außenhaut vorsteht, um an einem freien Ende eine Strömungsabrisskante der Strömungsabrissvorrichtung zu bilden;
und/oder
- die Strömungsabrissvorrichtung insbesondere eine einziehbare Einheit umfasst, wobei die einziehbare Einheit einen aktivierten Zustand und einen deaktivierten Zustand aufweist, wobei die einziehbare Einheit in dem deaktivierten Zustand in die Außenhaut eingezogen ist, insbesondere im Wesentlichen vollständig in die Außenhaut eingezogen ist, sodass eine im Wesentlichen bündige Außenhaut in einem Bereich der deaktivierten Strömungsabrissvorrichtung gebildet wird, und die einziehbare Einheit in dem aktivierten Zustand von der Außenhaut vorsteht, um an einem freien Ende eine Strömungsabrisskante der Strömungsabrissvorrichtung zu bilden, wobei die einziehbare Einheit insbesondere ein im Wesentlichen plattenförmiges Strömungsabrisselement aufweist; wobei das Strömungsabrisselement insbesondere eine wenigstens abschnittsweise ebene und/oder wenigstens abschnittsweise gekrümmte Strömungsleitfläche bildet.

12. Fahrzeug nach einem der vorhergehenden Ansprüche, wobei
- die Strömungsabrissvorrichtung (103.7; 203.7; 303.7; 403.7) derart angeordnet ist, dass sich die dauerhafte Trennung eines ersten Luftstroms (106.1) von der Außenhaut (103.4; 203.4; 303.4; 403.4) des Wagenkastens (103.8; 203.8; 303.8; 403.8) über einen Strömungsabrissbereich der Außenhaut (103.4; 203.4; 303.4; 403.4) erstreckt;
- der Strömungsabrissbereich ausreichend groß ist, um einen ersten Anstieg einer statischen Druckverteilung innerhalb des abgelösten ersten Luftstroms (106.1) zu erzeugen und um die Bildung zweier ausgeprägter longitudinaler Wirbelschleppen in einem Nachlauf des Wagenkastens (103; 203; 303; 403) zu verringern, insbesondere im Wesentlichen zu vermeiden;
- wobei der erste Anstieg der statischen Druckverteilung innerhalb des abgelösten Luftstroms (106.1) insbesondere als Funktion in Abhängigkeit von einer statischen Druckverteilung in einem benachbarten seitlichen zweiten Luftstrom (106.2) über einen seitlichen Teil der Außenhaut (103.4; 203.4; 303.4; 403.4) des Wagenkastens (103; 203; 303; 403) gewählt ist, der zu der Strömungsabrissvorrichtung (103.7; 203.7; 303.7; 403.7) benachbart ist;

13. Fahrzeug nach einem der vorhergehenden Ansprüche, wobei
- die Strömungsabrissvorrichtung (103.7; 203.7; 303.7; 403.7) eine erste Strömungsabrissvorrichtung ist, die an einem ersten Ende des Fahrzeugs angeordnet ist;
- eine zweite Strömungsabrissvorrichtung an einem gegenüberliegenden zweiten Ende des Fahrzeugs angeordnet ist,
- das Fahrzeug insbesondere mehrere separate Fahrzeugmodule umfasst, die gelenkig miteinander verbunden sind, wobei die erste Strömungsabrissvorrichtung an einem ersten Fahrzeugmodul angeordnet ist und die zweite Strömungsabrissvorrichtung an einem gegenüberliegenden zweiten Fahrzeugmodul angeordnet ist;
- die zweite Strömungsabrissvorrichtung insbesondere im Wesentlichen mit der ersten Strömungsabrissvorrichtung (103.7; 203.7; 303.7; 403.7) identisch ist.

14. Fahrzeug nach einem der vorhergehenden Ansprüche, wobei
- der Wagenkasten (103; 203; 303; 403) ein einstöckiger oder doppelstöckiger Wagenkasten ist;
und/oder
- das Fahrzeug mehrere separate Fahrzeugmodule aufweist, die gelenkig miteinander verbunden sind;
und/oder
- der Kopfabschnitt ein schlanker und langgestreckter Kopfabschnitt ist; und/oder
- der Kopfabschnitt in Längsrichtung eine maximale Kopflänge aufweist, wobei die maximale Kopflänge wenigstens 100%, vorzugsweise wenigstens 125%, weiter vorzugsweise wenigstens 150%, weiter vorzugsweise 125% bis 175%, der maximalen Fahrzeughöhenabmessung ist;
und/oder
- der Kopfabschnitt eine Frontscheibeneinheit aufweist, die eine Frontscheibenrahmeneinheit umfasst, wobei die Frontscheibenrahmeneinheit insbesondere eine Wischereinheit umfasst, wobei die Strömungsabrissvorrichtung von der Frontscheibeneinheit, insbesondere von der Wischereinheit, beabstandet ist, wobei die Strömungsabrissvorrichtung insbesondere in der Höhenrichtung unterhalb der Frontscheibeneinheit angeordnet ist, insbesondere unterhalb der Wischereinheit angeordnet ist, und/oder sich zwischen der Frontscheibeneinheit, insbesondere der Wischereinheit, und einem freien Ende des Wagenkastens befindet.

15. Verfahren zum Betreiben eines Fahrzeugs nach einem der vorhergehenden Ansprüche, umfassend
- Betreiben des Fahrzeugs in einer ersten Fahrtrichtung, wobei die Strömungsabrissvorrichtung (103.7; 203.7; 303.7; 403.7) aktiviert ist und sich an einem hinteren Ende des Fahrzeugs befindet,
und/oder
- Deaktivieren der Strömungsabrissvorrichtung und Betreiben des Fahrzeugs in einer zweiten Fahrtrichtung, wobei sich die Strömungsabrissvorrichtung (103.7; 203.7; 303.7; 403.7) an einem vorderen Ende des Fahrzeugs befindet.

## Revendications

1. Véhicule, en particulier un véhicule ferroviaire, pour une opération bidirectionnelle à une vitesse de déplacement nominale, en particulier supérieure à 160 km/h à 200 km/h, dans un sens de déplacement respectif, comprenant
- au moins un module de véhicule (102; 202 ; 302; 402) avec une caisse de wagon (103; 203; 303; 403) supportée par un train de roulement (104) configuré pour rouler sur une voie (105) définissant un niveau de voie;
- ledit module de véhicule (102; 202; 302; 402) définissant une direction longitudinale, une direction transversale et une direction de hauteur;
- ladite caisse de wagon (103; 203; 303; 403) ayant une peau extérieure (103.4; 203.4; 303.4; 403.4) définissant une section de corps généralement prismatique et une section de tête (103.2; 203.2; 303.2; 403.2) non prismatique s'effilant latéralement et située à une de ses extrémités;
- ledit module de véhicule (102; 202; 302; 402), à une transition entre ladite section de corps et ladite section de tête, ayant une dimension de hauteur de véhicule maximale au-dessus dudit niveau de voie dans ladite direction de hauteur;
- ladite caisse de wagon (103; 203; 303; 403), dans une partie de ladite section de tête visant par le haut, ayant une section de séparation de flux (103,6; 203,6; 303,6; 403,6) comprenant un dispositif de séparation de flux (103,7; 203,7; 303,7; 403,7), en particulier un bord de séparation de flux (103,9; 203,9; 303,9; 403,9);
- ledit dispositif de séparation de flux (103,7; 203,7; 303,7; 403,7), en particulier, ledit bord de séparation de flux, dans une zone transversalement centrale de ladite caisse de wagon (103; 203; 303; 403) et au moins dans un état activé, étant situé à une hauteur de séparation de flux dans ladite direction de hauteur de véhicule;
- ledit dispositif de séparation de flux (103,7; 203,7; 303,7; 403,7) assurant une séparation persistante d'une partie supérieure d'un flux d'air (106) de ladite peau extérieure (103,4; 203,4; 303,4; 403,4) de ladite caisse de wagon (103; 203; 303; 403) lorsque ledit module de véhicule (102; 202; 302; 402) fonctionne à ladite vitesse de déplacement avec ladite section de tête (103,2; 203,2; 303,2; 403,2) formant une extrémité arrière dudit module de véhicule (102; 202; 302; 402);
**caractérisé en ce que**
- ledit dispositif de séparation de flux (103,7; 203,7; 303,7; 403,7), au moins dans ledit état activé, définissant une section de séparation de flux généralement concave de ladite peau extérieure,
- ladite hauteur de séparation de flux allant jusqu'à 50% à 65% de ladite dimension de hauteur de véhicule maximale, de préférence de 25% à 50% de ladite dimension de hauteur de véhicule maximale, plus préférablement de 30% à 46% de ladite dimension de hauteur de véhicule maximale, encore plus préférablement de 33% à 39% de ladite dimension de hauteur de véhicule maximale.

2. Véhicule selon la revendication 1, dans lequel
- ladite hauteur de séparation de flux va jusqu'à 2500 mm, de préférence de 900 mm à 1850 mm, plus préférablement de 1150 mm à 1650 mm, encore plus préférablement de 1275 mm à 1750 mm, ledit dispositif de séparation de flux, en particulier, étant un dispositif passif à effet permanent, et ladite hauteur de séparation de flux allant de 1100 mm à 1700 mm, de préférence de 1200 mm à 1500 mm, plus préférentiellement de 1300 mm à 1400 mm, ou ledit dispositif de séparation de flux, en particulier, étant un dispositif activable sélectivement, en particulier un dispositif généralement en forme de plaque, et ladite hauteur de séparation de flux allant de 900 mm à 2500 mm, de préférence de 1300 mm à 1900 mm, plus préférablement de 1600 mm à 1750 mm;
et/ou
- ledit dispositif de séparation de flux, en particulier, ledit bord de séparation de flux, dans un plan longitudinal central perpendiculaire à ladite direction transversale, a une distance de nez dans ladite direction longitudinale à partir d'une extrémité libre de ladite section de tête, et ladite section de tête ayant une longueur maximale dans ladite direction longitudinale;
- ladite distance de nez allant de 0 mm à 600 mm, de préférence de 30 mm à 350 mm, plus préférentiellement de 50 mm à 200 mm, ledit dispositif de séparation de flux, en particulier, étant un dispositif passif à effet permanent, et ladite distance de de nez allant de 0 mm à 400 mm, de préférence de 90 mm à 200 mm, plus préférentiellement de 90 mm à 150 mm, ou ledit dispositif de séparation de flux, en particulier, étant un dispositif activable sélectivement, en particulier un dispositif généralement en forme de plaque, et ladite distance de nez allant de 0 mm à 600 mm, de préférence de 20 mm à 350 mm, plus préférentiellement de 40 mm à 200 mm;
et/ou
- ladite distance de nez allant de 0% à 11%, de préférence de 0% à 6%, plus préférentiellement de 1,0% à 3,5%, de ladite longueur maximale, ledit dispositif de séparation de flux étant en particulier un dispositif passif à effet permanent et ladite distance de nez allant de 0% à 7%, de préférence de 1% à 4,5%, plus préférentiellement de 1,5% à 3,5%, de ladite longueur maximale, ou ledit dispositif de séparation de flux, en particulier, étant un dispositif activable sélectivement, en particulier un dispositif généralement en forme de plaque, et ladite distance de nez allant de 0% à 12%, de préférence de 0% à 6%, plus préférentiellement de 0,5% à 3,5% de ladite longueur maximale.

3. Véhicule selon la revendication 1 ou 2, dans lequel
- une partie d'avance de ladite peau extérieure située sur un côté dudit dispositif de séparation de flux opposé à une extrémité libre de ladite section de tête, dans un plan longitudinal central perpendiculaire à ladite direction transversale, impose une direction de flux d'avance sur ledit flux d'air, qui est inclinée par rapport à ladite direction longitudinale de 20° à 60°, de préférence de 30° à 50°, plus préférablement de 35° à 45°; et
- ledit dispositif de séparation de flux (103,7; 203,7; 303,7; 403,7), au moins dans ledit état activé, comprend une première section de rampe située adjacente audit bord de séparation de flux (103,9; 203,9; 303,9; 403,9) sur un côté dudit bord de séparation de flux détourné d'une extrémité libre de ladite section de tête;
dans lequel
- ladite première section de rampe, dans un plan longitudinal central perpendiculaire à ladite direction transversale, a un point de départ de tangente sur ladite peau extérieure situé à une distance de 150 mm dudit bord de séparation de flux et définit une première direction de tangente commençant audit point de départ de tangente, étant tangent audit bord de séparation de flux et pointant vers une extrémité libre de ladite section de tête, ladite première direction de tangente étant inclinée par rapport à ladite direction longitudinale d'un premier angle d'inclinaison, ledit premier angle d'inclinaison allant de -25° à +25°, de préférence de -15° à +20°, plus préférentiellement de 0° à +15°, une valeur positive dudit premier angle d'inclinaison étant représentative de ladite première direction de tangente ayant une composante vers ladite voie;
et/ou dans lequel
- ladite peau extérieure définit une première surface médiane de ladite première section de rampe et ladite première surface médiane, dans un plan longitudinal central perpendiculaire à ladite direction transversale, à sa transition vers ledit bord de séparation de flux, définissant une seconde direction de tangente pointant vers une extrémité libre de ladite section de tête, ladite deuxième direction de tangente étant inclinée par rapport à ladite direction longitudinale d'un deuxième angle d'inclinaison, ledit deuxième angle d'inclinaison allant de -25° à +25°, de préférence de -10° à +15°, plus préférablement de -5° à +10°, une valeur positive dudit deuxième angle d'inclinaison étant représentative de ladite seconde direction de tangente ayant une composante vers ladite voie;
et/ou dans lequel
- ladite première section de rampe, dans un plan longitudinal central perpendiculaire à ladite direction transversale, est configurée pour imposer, au niveau dudit bord de séparation de flux, une première direction de flux sur un premier flux d'air circulant, à ladite vitesse de fonctionnement nominale, le long de ladite peau extérieure dans une direction parallèle audit plan longitudinal central vers ladite extrémité libre, ladite première direction de flux étant inclinée par rapport à ladite direction longitudinale d'un troisième angle d'inclinaison, ledit troisième angle d'inclinaison allant de 25° à +25°, de préférence de -15° à +20°, plus préférentiellement de 0° à +15°, une valeur positive dudit troisième angle d'inclinaison étant représentative dudit premier flux d'air ayant une composante de flux vers ladite voie.

4. Véhicule selon la revendication 3, dans lequel
- ledit dispositif de séparation de flux est un dispositif passif à effet permanent, ledit premier angle d'inclinaison et/ou ledit troisième angle d'inclinaison allant de -5° à +25°, de préférence de 0° à +20°, plus préférentiellement de +1° à +15°, et/ou ledit deuxième angle d'inclinaison allant de -5° à +15°, de préférence de 0° à +10°, plus préférentiellement de +1° à +5° ;
ou
- ledit dispositif de séparation de flux est un dispositif activable sélectivement, en particulier un dispositif généralement en forme de plaque, ledit premier angle d'inclinaison et/ou ledit deuxième angle d'inclinaison et/ou ledit troisième angle d'inclinaison allant de -30° à +20° , de préférence de -20° à +15°, plus préférentiellement de -10° à +10°.

5. Véhicule selon la revendication 3 ou 4, dans lequel
- ledit dispositif de séparation de flux (103,7; 203,7; 303,7; 403,7) comprend une deuxième section de rampe située adjacente audit bord de séparation de flux sur un côté dudit bord de séparation de flux tourné vers ladite extrémité libre de ladite section de tête;
dans lequel
- ladite peau extérieure définit une seconde surface médiane de ladite deuxième section de rampe et ladite seconde surface médiane, dans ledit plan longitudinal central, à sa transition vers ledit bord de séparation de flux, définissant une troisième direction de tangente pointant à l'opposé de ladite extrémité libre de ladite une section de tête, ladite troisième direction de tangente, dans un secteur faisant face dans ladite direction de hauteur, étant inclinée par rapport à ladite première direction de tangente de 60° à 160°, de préférence de 90° à 150°, plus préférablement de 110° à 140°;
et/ou dans lequel
- ladite deuxième section de rampe, dans ledit plan longitudinal central, est configurée pour imposer, au niveau dudit bord de séparation de flux, une seconde direction de flux sur un second flux d'air circulant, à ladite vitesse de fonctionnement nominale, le long de ladite peau extérieure dans une direction parallèle audit plan longitudinal central à partir de ladite extrémité libre de ladite section de tête, ladite seconde direction d'flux, dans un secteur faisant face dans ladite direction de hauteur, étant inclinée par rapport à ladite première direction de flux de 60° à 160°, de préférence de 90° à 150°, plus préférablement de 110° à 140°.

6. Véhicule selon l'une quelconque des revendications précédentes, dans lequel
- ladite section de séparation de flux, dans un plan longitudinal central perpendiculaire à ladite direction transversale, a un point d'inflexion auquel, en particulier, une courbure de ladite peau extérieure change de signe et/ou un pli est formé dans ladite peau extérieure;
- ledit point d'inflexion, dans ledit plan longitudinal central, ayant une distance de point d'inflexion dudit bord de séparation de flux, et
- ladite section de tête ayant une longueur de tête maximale dans ladite direction longitudinale;
dans lequel
- ladite distance du point d'inflexion va de 50 mm à 900 mm, de préférence de 150 mm à 800 mm, plus préférablement de 150 mm à 500 mm;
- ledit dispositif de séparation de flux, en particulier, étant un dispositif passif à effet permanent, et ladite distance de point d'inflexion allant de 50 mm à 700 mm, de préférence de 120 mm à 600 mm, plus préférentiellement de 150 mm à 500 mm; ou ledit dispositif de séparation de flux, en particulier, étant un dispositif activable sélectivement, en particulier un dispositif généralement en forme de plaque, et ladite distance de point d'inflexion allant de 50 mm à 900 mm, de préférence de 250 mm à 800 mm, plus préférablement de 300 mm à 600 mm;
et/ou dans lequel
- ladite distance du point d'inflexion va de 0,7% à 15%, de préférence de 2,5% à 13,5%, plus préférablement de 2,5% à 8,5%, de ladite longueur de tête maximale;
- ledit dispositif de séparation de flux, en particulier, étant un dispositif passif à effet permanent et ladite distance de point d'inflexion allant de 0,7% à 12%, de préférence de 2% à 10%, plus préférentiellement de 2,5% à 8,5%, de ladite longueur maximale de tête , ou ledit dispositif de séparation de flux, en particulier, étant un dispositif activable sélectivement, en particulier un dispositif généralement en forme de plaque, et ladite distance de point d'inflexion allant de 0,5% à 15%, de préférence de 4% à 13,5%, plus préférablement de 5% à 10% de ladite longueur de tête maximale.

7. Véhicule selon l'une quelconque des revendications précédentes, dans lequel
- ledit dispositif de séparation de flux (103,7; 203,7; 303,7; 403,7) comprend un bord de séparation de flux aigu (103,9; 203,9; 303,9; 403,9);
- ledit bord de séparation de flux (103,9; 203,9; 303,9; 403,9) ayant au moins une section de bord définissant une direction tangentielle en chaque point de ladite section de bord;
- ledit bord de séparation de flux (103,9; 203,9; 303,9; 403,9), dans ladite section de bord et dans un plan de coupe perpendiculaire à ladite direction tangentielle, ayant un rayon de courbure inférieur à 15 mm, de préférence inférieur à 10 mm, plus préférablement inférieur à 5 mm;
- ladite section de bord, en particulier, s'étendant sur au moins 60% dudit bord de séparation de flux (103,9; 203,9; 303,9; 403,9), de préférence sur au moins 80% dudit bord de séparation de flux (103,9; 203,9; 303,9; 403,9), plus préférablement sur sensiblement 100% dudit bord de séparation de flux (103,9; 203,9; 303,9; 403,9).

8. Véhicule selon l'une quelconque des revendications précédentes, dans lequel
- ledit bord de séparation de flux (103,7; 203,7; 303,7; 403,7) s'étend, en particulier s'étend sensiblement en continu, d'une surface latérale à une surface latérale opposée de ladite caisse de wagon (103; 203; 303; 403),
- ledit bord de séparation de flux, en particulier, continue, en particulier continue sensiblement de manière sans couture, au moins un bord de séparation de flux de vent latéral s'étendant dans ladite direction longitudinale le long d'au moins une desdites surfaces latérales de ladite caisse de wagon;
- ledit au moins un bord de séparation de flux de vent latéral s'étendant, dans ladite direction longitudinale, le long d'une fenêtre avant dudit véhicule, en particulier, jusqu'à une section de toit de ladite caisse de wagon,
- ledit dispositif de séparation de flux (103,7; 203,7; 303,7; 403,7), en particulier, étant sensiblement symétrique par rapport à un plan longitudinal central perpendiculaire à ladite direction transversale.

9. Véhicule selon l'une quelconque des revendications précédentes, dans lequel
- une projection perpendiculaire dudit bord de séparation de flux (103,9; 203,9; 303,9; 403,9) sur un plan transversal perpendiculaire à ladite direction longitudinale a une largeur de bord maximale Wsₘₐₓ dans ladite direction transversale allant de 500 mm à 2500 mm, de préférence de 700 mm à 1900 mm, plus préférentiellement de 800 mm à 1850 mm; ledit dispositif de séparation de flux, en particulier, étant un dispositif passif à effet permanent, et ladite largeur de bord maximale Wsₘₐₓ allant de 500 mm à 2500 mm, de préférence de 1200 mm à 1900 mm, plus préférablement de 1300 mm à 1850 mm; ou ledit dispositif de séparation de flux, en particulier, étant un dispositif activable sélectivement, en particulier un dispositif généralement en forme de plaque, et ladite largeur de bord maximale Wsₘₐₓ allant de 500 mm à 1100 mm, de préférence de 700 mm à 1000 mm, plus préférablement de 750 mm à 900 mm;
et/ou
- une projection perpendiculaire dudit bord de séparation de flux (103,9; 203,9; 303,9; 403,9) sur un plan transversal perpendiculaire à ladite direction longitudinale a une largeur de bord maximale Wsₘₐₓ dans ladite direction transversale et ladite peau extérieure (103,4; 203,4; 303,4; 403,4), dans ladite direction transversale, a une largeur maximale de caisse de wagon Wₘₐₓ, ladite largeur maximale de bord Wsₘₐₓ allant de 15% à 70%, de préférence de 25% à 65% plus préférablement de 45% à 65%, de ladite largeur maximale de caisse de wagon Wₘₐₓ, ledit dispositif de séparation de flux, en particulier, étant un dispositif passif à effet permanent et ladite largeur de bord maximale Wsₘₐₓ allant de 15% à 70%, de préférence de 40% à 65%, plus préférablement de 45% à 60%, de ladite largeur maximale de caisse de wagon Wₘₐₓ, ou ledit dispositif de séparation de flux, en particulier, étant un dispositif activable sélectivement, en particulier un dispositif généralement en forme de plaque, et ladite largeur de bord maximale Wₘₐₓ allant de 15% à 40%, de préférence de 25% à 35%, plus préférablement de 27% à 32% de ladite largeur maximale de caisse du wagon Wₘₐₓ.

10. Véhicule selon l'une quelconque des revendications précédentes, dans lequel
- ledit bord de séparation de flux (103,9; 203,9; 303,9; 403,9) est au moins en partie formé par un composant à effet aérodynamique permanent dudit dispositif de séparation de flux (103,7; 203,7; 303,7; 403,7);
et/ou
- ledit bord de séparation de flux au moins en partie est formé par une partie sensiblement rigide de ladite peau extérieure;
et/ou
- ledit dispositif de séparation de flux est formé au moins en partie par une dépression dans ladite peau extérieure, ladite dépression, en particulier, étant sensiblement en forme de faucille.
et/ou
- ledit dispositif de séparation de flux comprend une unité d'interface configurée pour monter un dispositif de couverture configuré pour couvrir le dispositif de séparation de flux dans un état désactivé.

11. Véhicule selon l'une quelconque des revendications précédentes, dans lequel
- ledit dispositif de séparation de flux est un composant activable sélectivement étant aérodynamiquement efficace dans son état activé;
- ledit dispositif de séparation de flux, en particulier, comprenant une unité de volet pivotant, ladite unité de volet pivotant ayant un état activé et un état désactivé, ladite unité de volet pivotant, dans ledit état désactivé, formant une partie de ladite peau extérieure sensiblement au ras des parties adjacentes de ladite peau extérieure, et ladite unité de volet pivotant, dans ledit état activé, faisant saillie de ladite peau extérieure pour former, à une extrémité libre, un bord de séparation de flux dudit dispositif de séparation de flux;
et/ou
- ledit dispositif de séparation de flux, en particulier, comprenant une unité rétractable, ladite unité rétractable ayant un état activé et un état désactivé, ladite unité rétractable, dans ledit état désactivé, étant rétractée, en particulier sensiblement entièrement rétractée, dans ladite peau extérieure, en particulier, rétractée de telle sorte qu'une peau extérieure sensiblement affleurante est formée dans une zone dudit dispositif de séparation de flux désactivé, et ladite unité rétractable, dans ledit état activé, faisant saillie de ladite peau extérieure pour former, à une extrémité libre, un bord de séparation de flux dudit dispositif de séparation de flux, ladite unité rétractable, en particulier, comprenant un élément de séparation de flux sensiblement en forme de plaque; ledit élément de séparation de flux, en particulier, formant une surface de guidage de flux au moins en sections plane et/ou au moins en sections incurvée;

12. Véhicule selon l'une quelconque des revendications précédentes, dans lequel
- ledit dispositif de séparation de flux (103,7; 203,7; 303,7; 403,7) est agencé de telle sorte que ladite séparation persistante d'un premier flux d'air (106,1) de ladite peau extérieure (103,4; 203,4; 303,4; 403,4) de ladite caisse de wagon (103,8; 203,8; 303,8; 403,8) s'étend sur une zone de séparation de flux de ladite peau extérieure (103,4; 203,4; 303,4; 403,4);
- ladite zone de séparation de flux étant de taille suffisante pour générer une première élévation d'une distribution de pression statique à l'intérieur dudit premier flux d'air séparé (106.1) et pour au moins réduire, en particulier éviter sensiblement, la formation de deux tourbillons de sillage longitudinaux prononcés dans un sillage de ladite caisse de wagon (103; 203; 303; 403);
- ladite première augmentation de ladite distribution de pression statique à l'intérieur dudit flux d'air séparé (106.1), en particulier, étant sélectionnée en fonction d'une distribution de pression statique dans un second flux d'air latéral adjacent (106.2) sur une partie latérale de ladite peau extérieure (103.4; 203,4; 303,4; 403,4) de ladite caisse de wagon (103; 203; 303; 403) situé à côté dudit dispositif de séparation de flux (103,7; 203,7; 303,7; 403,7);

13. Véhicule selon l'une quelconque des revendications précédentes, dans lequel
- ledit dispositif de séparation de flux (103,7; 203,7; 303,7; 403,7) est un premier dispositif de séparation de flux situé à une première extrémité dudit véhicule;
- un deuxième dispositif de séparation de flux étant situé à une seconde extrémité opposée dudit véhicule, ledit véhicule, en particulier, comprenant une pluralité de modules de véhicule séparés articulés les uns aux autres, ledit premier dispositif de séparation de flux étant situé au niveau d'un premier module de véhicule et ledit le second dispositif de séparation de flux étant situé au niveau d'un deuxième module de véhicule opposé;
- ledit deuxième dispositif de séparation de flux, en particulier, étant sensiblement identique audit premier dispositif de séparation de flux (103,7; 203,7; 303,7; 403,7).

14. Véhicule selon l'une quelconque des revendications précédentes, dans lequel
- ladite caisse de wagon (103; 203; 303; 403) est une caisse de wagon à un ou deux étages;
et/ou
- ledit véhicule comprend une pluralité de modules de véhicule séparés articulés entre eux;
et/ou
- ladite section de tête est une section de tête élancée et allongée;
et/ou
- ladite section de tête, dans ladite direction longitudinale, a une longueur de tête maximale, ladite longueur de tête maximale étant d'au moins 100%, de préférence au moins 125%, plus préférablement au moins 150%, plus préférablement 125% à 175%, de ladite dimension de hauteur maximale de véhicule
et/ou
- ladite section de tête comprend une unité de fenêtre avant comprenant une unité de cadre de fenêtre avant, ladite unité de cadre de fenêtre avant, en en particulier, comprenant une unité d'essuie-glace, ledit dispositif de séparation de flux étant espacé de ladite unité de fenêtre avant, en particulier, de ladite unité d'essuie-glace, ledit dispositif de séparation de flux, en particulier, dans ladite direction de hauteur, étant situé en dessous de ladite unité de fenêtre avant, en particulier, au-dessous dudit essuie-glace, et/ou étant situé entre ladite unité de vitre avant, en particulier, ladite unité d'essuie-glace, et une extrémité libre de ladite caisse de wagon.

15. Procédé d'opération d'un véhicule selon l'une quelconque des revendications précédentes, comprenant:
- l'opération dudit véhicule dans une première direction de déplacement, ledit dispositif de séparation de flux (103,7; 203,7; 303,7; 403,7) étant activé et situé à une extrémité arrière de ladite véhicule,
et/ou
- la désactivation dudit dispositif de séparation de flux et l'opération dudit véhicule dans une seconde direction de déplacement, dans lequel ledit dispositif de séparation de flux (103,7; 203,7; 303,7; 403,7) est situé à une extrémité avant dudit véhicule.
